(19) Europäisches Patentamt / European Patent Office / Office européen des brevets

(11) **EP 3 812 428 B1**

(12) **EUROPEAN PATENT SPECIFICATION**

(45) Date of publication and mention of the grant of the patent:
**03.12.2025 Bulletin 2025/49**

(21) Application number: **19823361.1**

(22) Date of filing: **11.06.2019**

(51) International Patent Classification (IPC):
**C08L 101/00** *(2006.01)*    **B05D 7/24** *(2006.01)*
**C08F 2/00** *(2006.01)*    **G02B 5/26** *(2006.01)*
**G02B 5/20** *(2006.01)*    **G02B 1/00** *(2006.01)*

(52) Cooperative Patent Classification (CPC):
**G02B 5/208; G02B 1/005; G02B 5/206; G02B 5/26;**
C08F 2/50

(86) International application number:
**PCT/JP2019/023093**

(87) International publication number:
**WO 2019/244713 (26.12.2019 Gazette 2019/52)**

(54) **COLLOIDAL STRUCTURE, MULTI-COLLOIDAL STRUCTURE, AND PRODUCTION METHOD FOR COLLOIDAL STRUCTURE**

KOLLOIDALE STRUKTUR, MULTIKOLLOIDALE STRUKTUR UND HERSTELLUNGSVERFAHREN FÜR KOLLOIDALE STRUKTUR

STRUCTURE COLLOÏDALE, STRUCTURE MULTI-COLLOÏDALE, ET PROCÉDÉ DE PRODUCTION DE STRUCTURE COLLOÏDALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2018 JP 2018116859**
         **14.11.2018 JP 2018213641**

(43) Date of publication of application:
**28.04.2021 Bulletin 2021/17**

(73) Proprietor: **Panasonic Intellectual Property Management Co., Ltd.**
**Osaka-shi, Osaka 540-6207 (JP)**

(72) Inventors:
- **SHIGITANI, Ryosuke**
  **Chuo-ku, Osaka-shi**
  **Osaka 540-6207 (JP)**

- **FUJII, Shunpei**
  **Chuo-ku, Osaka-shi**
  **Osaka 540-6207 (JP)**

(74) Representative: **Müller-Boré & Partner Patentanwälte PartG mbB**
**Friedenheimer Brücke 21**
**80639 München (DE)**

(56) References cited:
  WO-A1-2016/093121     JP-A- 2005 338 243
  JP-A- 2009 139 796     JP-A- 2009 139 796
  JP-A- 2010 058 091     JP-A- 2017 223 915
  US-A1- 2017 361 297

**Description**

TECHNICAL FIELD

The present invention relates to a colloidal structure, a multi-colloidal structure, and a method for producing a colloidal structure.

BACKGROUND ART

An assembly in which nano-sized colloidal particles are arrayed three-dimensionally and periodically is called a colloidal crystal due to a similarity thereof to normal crystals. When light enters this colloidal crystal, diffraction interference of the light occurs inside the colloidal crystal, and accordingly, a phenomenon that the colloidal crystal reflects light with a specific wavelength occurs due to a periodic structure thereof. For example, a colloidal crystal made of sub-micron-sized colloidal particles can reflect light in a range from ultraviolet to visible, and further to infrared wavelengths according to a size of the particles. Due to such characteristics, it is considered to apply the colloidal crystal to a color material, an optical memory material, a display device, an optical filter, an optical switch, a sensor and the like.

Patent Literature 1 discloses a method for producing a colloidal crystalline film, the method including: a step of forming a coating film by coating a substrate with a colloidal dispersion liquid in which colloidal particles are dispersed in a three-dimensionally regular array state in a dispersion medium component; and a step of producing a colloidal crystal film by polymerizing the dispersion medium component in the coating film. Moreover, Patent Literature 1 discloses that a colloidal crystal film in which a predetermined reflection peak is generated in a reflection spectrum is obtained by the above-described production method, and further, that a colloidal crystal pigment is obtained by pulverizing the colloidal crystal film.

CITATION LIST

PATENT LITERATURE

Patent Literature 1: Japanese Patent No. 5541620

Further prior art is represented by US 2017/361297 A1 and JP 2009 139796 A, each of these documents disclosing colloidal crystals.

SUMMARY OF INVENTION

Heretofore, it has been known that the reflection peak wavelength in the reflection spectrum shifts by changing a concentration of the colloidal particles in the colloidal crystal film. In other words, the concentration of the colloidal particles in the colloidal crystal film is adjusted, thus making it possible to control the reflection peak wavelength. However, though the colloidal crystal film exhibits a high reflectance when the concentration of the colloidal particles remains within a predetermined range, the reflectance decreases significantly when the concentration goes out of a predetermined range. Therefore, there has been a problem that light reflectivity of the colloidal crystal film decreases when the reflection peak wavelength is adjusted by changing the concentration of the colloidal particles.

The present invention has been made in consideration of such a problem as described above, which is inherent in the prior art. Then, it is an object of the present invention to provide a colloidal structure, a multi-colloidal structure, and a method for producing a colloidal structure, in which the reflection peak wavelength in the reflection spectrum is adjustable by a simple method while suppressing the decrease of the light reflectivity.

The invention is defined by the claims. In order to solve the above-described problem, a colloidal structure according to a first aspect of the present invention includes a plurality of types of colloidal particles, and a matrix that fixes the colloidal particles. The plurality of types of the colloidal particles include at least first colloidal particles and second colloidal particles, which are different in average particle size from each other. A coefficient of variation of particle size of each of the first colloidal particles and the second colloidal particles is less than 20%. Then, the plurality of types of the colloidal particles form a regular array in the matrix.

A multi-colloidal structure according to a second aspect of the present invention includes a plurality of the colloidal structures.

A multi-colloidal structure according to a third aspect of the present invention includes the colloidal structure and a colloidal crystal body. The colloidal crystal body includes only one type of colloidal particles, and a matrix that fixes the only one type of colloidal particles. Then, the only one type of colloidal particles form a regular array in the matrix.

A method for producing a colloidal structure according to a fourth aspect of the present invention includes: a dispersion liquid preparation step of preparing a colloidal dispersion liquid by dispersing a plurality of types of colloidal particles including at least first colloidal particles and second colloidal particles, which are different in average particle size from each other, together with at least one type of a monomer; a coating film generation step of applying the colloidal dispersion liquid onto a substrate and generating a coating film; and a polymerization step of fixing the plurality of types of the colloidal particles by a polymer by polymerizing the monomer in the coating film. In the polymerization step, the plurality of types of the colloidal particles form a regular array in the polymer. A coefficient of variation of particle size of each of the first colloidal particles and the second colloidal particles is less than 20%.

BRIEF DESCRIPTION OF DRAWINGS

[Fig. 1] Fig. 1 is a cross-sectional view schematically illustrating an example of a colloidal structure according to the present embodiment.

[Fig. 2] Fig. 2 is a schematic diagram illustrating a state in which two types of colloidal particles different in particle size aggregate independently of each other to establish a eutectic state.

[Fig. 3] Fig. 3 is a cross-sectional view schematically illustrating an example of a structural object using the colloidal structure according to the present embodiment.

[Fig. 4] Fig. 4 is cross-sectional views schematically illustrating examples of a multi-colloidal structure and a multi-structural object according to the present embodiment.

[Fig. 5] Fig. 5 is cross-sectional views schematically illustrating examples of the multi-colloidal structure and the multi-structural object according to the present embodiment.

[Fig. 6] Fig. 6 is cross-sectional views schematically illustrating examples of the multi-colloidal structure and the multi-structural object according to the present embodiment.

[Fig. 7] Fig. 7 is cross-sectional views schematically illustrating examples of the multi-colloidal structure and the multi-structural object according to the present embodiment.

[Fig. 8] Fig. 8 is a cross-sectional view illustrating an example of a light emitting device according to the present embodiment.

[Fig. 9] Fig. 9 is a perspective view illustrating an example of an illumination system according to the present embodiment.

[Fig. 10] Fig. 10(a) is an exploded perspective view illustrating a lamp in the illumination system according to the present embodiment. Fig. 10(b) is a schematic cross-sectional view illustrating a light source unit located in an enlarged region A of Fig. 10(a).

[Fig. 11] Fig. 11 is a diagram illustrating a reflection spectrum of a test sample of Example 1-1.

[Fig. 12] Fig. 12 is a diagram illustrating a reflection spectrum of a test sample of Example 1-2.

[Fig. 13] Fig. 13 is a diagram illustrating a reflection spectrum of a test sample of Example 1-3.

[Fig. 14] Fig. 14 is a diagram illustrating the reflection spectra of the test samples of Examples 1-1 to 1-3 in combination with one another.

[Fig. 15] Fig. 15 is a diagram illustrating reflection spectra of test samples of Comparative examples 1-1 to 1-3 in combination with one another.

[Fig. 16] Fig. 16 is a photograph showing a state of a surface of the test sample of Example 1-1, which is observed by a scanning electron microscope.

[Fig. 17] Fig. 17 is a photograph showing a state of a surface of the test sample of Example 1-3, which is observed by the scanning electron microscope.

[Fig. 18] Fig. 18 is a photograph showing a state of a cross section of the test sample of Example 1-1, which is observed by the scanning electron microscope.

[Fig. 19] Fig. 19 is a photograph illustrating an enlarged region of reference symbol B in Fig. 18.

[Fig. 20] Fig. 20 is a diagram illustrating a reflection spectrum of a test sample of Example 2.

DESCRIPTION OF EMBODIMENTS

A detailed description will be given below of a colloidal structure, a multi-colloidal structure and a method for producing a colloidal structure according to the present embodiment. Note that dimensional ratios in the drawings are exaggerated for convenience of explanation, and are sometimes different from actual ratios.

[Colloidal structure]

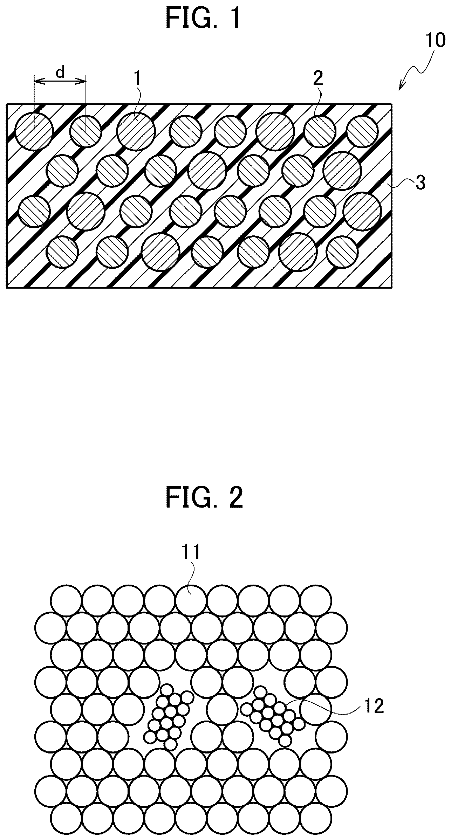

A colloidal structure of the present embodiment includes a colloidal crystal in which colloidal particles are arrayed three-dimensionally and periodically. Specifically, as illustrated in Fig. 1, a colloidal structure 10 includes a plurality of types of colloidal particles, and a matrix 3 that fixes the colloidal particles. The plurality of types of the colloidal particles include at least first colloidal particles 1 and second colloidal particles 2, and further, the first colloidal particles 1 and the second colloidal particles 2 are different in average particle size from each other.

In the colloidal structure 10 illustrated in Fig. 1, the first colloidal particles 1 and the second colloidal particles 2 are arrayed three-dimensionally and regularly in a state of being mixed with each other, and further, the matrix 3 is interposed between the first colloidal particles 1 and the second colloidal particles 2. That is, the colloidal structure 10 does not have a closely packed colloidal crystal formed in such a manner that the plurality of types of the colloidal particles contact one another, but has a loosely packed colloidal crystal in which the plurality of types of the colloidal particles are spaced apart from one another. Such a loosely packed colloidal crystal as described above is provided, whereby a part of light applied to the colloidal structure 10 can cause Bragg reflection, and a part of light that is not reflected can pass through the colloidal structure 10.

Preferably, the colloidal particles contained in the colloidal structure 10 contain at least one of an inorganic material or a resin material. That is, in the colloidal structure 10, preferably, the first colloidal particles 1 and the second colloidal particles 2 contain at least one of an inorganic material or a resin material. The colloidal particles contain an inorganic material, whereby durability of the obtained colloidal crystal can be enhanced. Moreover, the colloidal particles contain an organic material, whereby it becomes easy to form a shape of the colloidal particles into a spherical shape, and accordingly, it becomes easy for the colloidal particles to form a regular array. Note that the colloidal particles may be formed of only an inorganic material, or may be formed of only a resin material. Further, the colloidal particles may be formed of both of an inorganic material and a resin material.

As such an inorganic material, for example, metal such as gold and silver and a metal oxide such as silica, alumina and titania can be used. Moreover, as such a resin material, styrenic resin, acrylic resin and the like can be used. These materials may be used singly or in combination of two or more types thereof.

The styrenic resin is formed by polymerizing a styrenic monomer as a main component. As the styrenic monomer, there are mentioned styrene, o-methylstyrene, m-methylstyrene, p-methylstyrene, $\alpha$-methylstyrene, and p-methoxystyrene. Moreover, p-tert-butylstyrene, p-phenylstyrene, o-chlorostyrene, m-chlorostyrene, and p-chlorostyrene are also mentioned. These styrenic monomers may be used singly or in combination of two or more types thereof. Note that, in this description, a main component means 50% by mass or more.

The acrylic resin is formed by polymerizing a (meth) acrylic monomer as a main component, and may contain other monomers co-polymerizable with the (meth) acrylic monomer. As such a (meth) acrylic monomer, methyl (meth) acrylate, ethyl (meth) acrylate, 2-hydroxyethyl (meth) acrylate, 2-hydroxypropyl (meth) acrylate, and cyclohexyl (meth) acrylate are mentioned. $\beta$-carboxyethyl (meth) acrylate, diethylene glycol di (meth) acrylate, 1,6-hexane diol di (meth) acrylate, triethylene glycol di (meth) acrylate, and tripropylene glycol di (meth) acrylate are also mentioned. Moreover, trimethylolpropane tri (meth) acrylate, pentaerythritol tri (meth) acrylate, 1,6-hexanediol diglycidyl ether di (meth) acrylate are also mentioned. Bisphenol A diglycidyl ether di (meth) acrylate, neopentyl glycol diglycidyl ether di (meth) acrylate, dipentaerythritol hexa (meth) acrylate, and tricyclodecanyl (meth) acrylate are mentioned. The (meth) acrylic monomers may be used singly or in combination of two or more types thereof. Note that, in this description, the (meth) acrylic monomer includes a methacrylic monomer and an acrylic monomer.

Note that, preferably, the colloidal particles are made of inorganic particles, particularly preferably, are made of silica. Since it is easy to purchase the colloidal particles made of silica, it becomes possible to enhance industrial productivity of the colloidal structure 10. Moreover, also preferably, the colloidal particles are made of polymer particles, particularly preferably, made of at least one of acrylic resin or polystyrene. As for the colloidal particles made of a polymer, spherical ones are easily available, and further, the colloidal particles made of acrylic resin and/or polystyrene are widely used and easy to purchase, and therefore, it becomes possible to enhance the industrial productivity of the colloidal structure 10.

In the colloidal structure 10, preferably, the matrix 3 that fixes the colloidal particles contains resin for example. The matrix 3 contains resin, whereby the resin that is a solid immobilizes the regular array of the colloidal particles, and accordingly, mechanical strength of the colloidal structure 10 can be enhanced. Moreover, as will be described later, the resin can be cured by active energy rays, and accordingly, it becomes possible to enhance handleability of the colloidal structure 10, and to improve productivity thereof. Note that, as the matrix 3, it is preferable to use resin that has high light transmittance in a wavelength range of 300 nm or more and less than 800 nm.

Preferably, the resin for use in the matrix 3 contains at least one selected from the group consisting of acrylic resin, polycarbonate resin, cycloolefin resin, epoxy resin, silicone resin, an acrylic-styrene copolymer and styrenic resin.

Those mentioned above can be used as the acrylic resin and the styrenic resin. As the polycarbonate resin, for example, there are mentioned: an aromatic polycarbonate polymer obtained by reacting divalent phenol with phosgene or a carbonic acid diester compound; and aromatic polycarbonate resin that is a copolymer of these. Moreover, as the polycarbonate resin, aliphatic polycarbonate resin obtained by a copolymer of carbon dioxide and epoxide is also mentioned. Further, as the polycarbonate resin, aromatic-aliphatic polycarbonate obtained by copolymerizing these is also mentioned. Moreover, straight-chain aliphatic divalent carbonic acids such as adipic acid, pimelic acid, suberic acid, azelaic acid, sebacic acid and decanedicarboxylic acid are also mentioned as such copolymerizable monomers of the polycarbonate resin. Note that the polycarbonate resin may be used singly or in combination of two or more types thereof.

The cycloolefin resin is resin in which principal chains are made of carbon-carbon bonds and a cyclic hydrocarbon structure is provided in at least a part of the principal chains. As the cycloolefin resin, an addition copolymer of ethylene and norbornene, an addition copolymer of ethylene and tetracyclododecene, and the like are mentioned.

The epoxy resin is resin obtained by curing, by a curing agent, a prepolymer that contains two or more epoxy groups in one molecule. As the epoxy resin, for example, there can be used bisphenol A-type epoxy resin, bisphenol F-type epoxy resin, bisphenol S-type epoxy resin, biphenyl-type epoxy resin, naphthalene diol-type epoxy resin, and phenol novolac-type epoxy resin. Moreover, cresol novolac-type epoxy resin, bisphenol A novolac-type epoxy resin, cyclic aliphatic epoxy resin, and heterocyclic epoxy resin (triglycidyl isocyanurate, diglycidyl hydantoin and the like) can be used. Further, modified epoxy resins obtained by modifying these epoxy resins by various materials can also be used. Moreover, halides such as bromides and chlorides of these epoxy resins can also be used. These epoxy resins may be used singly or in combination of two or more types thereof.

As the curing agent that cures the epoxy resin, any compound can be used as long as being a compound having an active group capable of reacting with an epoxy group. A well-known epoxy curing agent can be used appropriately, and in particular, compounds having an amino group, an acid anhydride group, or a hydroxyphenyl group are suitable. For example, there are mentioned dicyandiamides and derivatives thereof, organic acid hydrazides, amine imides, aliphatic amines, aromatic amines, tertiary amines, polyamine salts, microcapsule-type curing agents, imidazole-type curing agents, acid anhydrides, and phenol novolaks, and the like. These curing agents may be used singly or in combination of two or more types thereof.

Moreover, various curing accelerators can be used in combination with the above-described curing agents. As the curing accelerators, for example, a tertiary amine curing accelerator, a urea derivative curing accelerator, an imidazole curing accelerator, and a diazabicycloundecene (DBU) curing accelerator can be mentioned. Moreover, an organic phosphorus curing accelerator (for example, a phosphine curing accelerator and the like), an onium salt curing accelerator (for example, a phosphonium salt curing accelerator, a sulfonium salt curing accelerator, an ammonium salt curing accelerator and the like) can be mentioned. Further, a metal chelate curing accelerator, an acid and metal salt curing accelerator and the like can also be mentioned.

The silicone resin is resin in which straight-chain polymers made of siloxane bonds cross-link with one another to form a three-dimensional net structure. The silicone resin includes, for example, dimethyl silicone in which side chains are composed of a methyl group, and aromatic silicone in which aromatic molecules are substituted for a part. In the present embodiment, it is the aromatic silicone that is particularly preferable as the silicone resin.

Note that the silicone resin may be made of a condensate obtained by performing dehydration condensation for alkoxysilane after performing hydrolysis for the same. As specific examples of the alkoxysilane, for example, triphenylethoxysilane, trimethylethoxysilane, triethylethoxysilane, triphenylmethoxysilane, triethylmethoxysilane, and ethyldimethylmethoxysilane are mentioned. Methyldiethylmethoxysilane, ethyldimethylethoxysilane, methyldiethylethoxysilane, phenyldimethylmethoxysilane, phenyldiethylmethoxysilane, phenyldimethylethoxysilane, and phenyldiethylethoxysilane are also mentioned. Moreover, methyldiphenylmethoxysilane, ethyldiphenylmethoxysilane, methyldiphenylethoxysilane, ethyldiphenylethoxysilane, tert-butoxytrimethylsilane, and butoxytrimethylsilane are also mentioned. Vinyltrimethoxysilane, vinyltriethoxysilane, $\beta$-(3,4-epoxycyclohexyl)ethyltrimethoxysilane, $\gamma$-glycidoxypropyltrimethoxysilane, and $\gamma$-methacryloxypropyltriethoxy silane are also mentioned. N-$\beta$(aminoethyl)$\gamma$-aminopropyltrimethoxysilane, N-$\beta$(aminoethyl)$\gamma$-aminopropyltriethoxysilane, $\gamma$-aminopropyltrimethoxysilane, and $\gamma$-aminopropyltriethoxysilane are also mentioned. Methyltriacetoxysilane, ethyltriacetoxysilane, N-$\beta$-phenyl-$\gamma$-aminopropyltrimethoxysilane, $\gamma$-chloropropyltrimethoxysilane, and $\gamma$-mercaptopropyltrimethoxysilane are also mentioned. Triethoxysilane, trimethoxysilane, triisopropoxysilane, tri-n-propoxysilane, triacetoxysilane, tetramethoxysilane, tetraethoxysilane, tetra-n-propoxysilane, and tetraisopropoxysilane are also mentioned. Note that such hydrolysis condensates of the alkoxysilane may be used singly or in combination of two or more types thereof.

The acrylic-styrene copolymer is one obtained by polymerizing the (meth) acrylic monomer and the styrenic monomer as main components. Moreover, the acrylic-styrene copolymer may contain other monomers polymerizable with the (meth) acrylic monomer and the styrenic monomer. As the acrylic-styrene copolymer, a styrene-(meth) acrylic acid ester copolymer, a styrene-diethylaminoethylmethacrylate copolymer, and a styrene-butadiene-acrylic acid ester copolymer are mentioned.

An average particle size of the colloidal particles in the colloidal structure 10 is preferably 0.01 $\mu$m to 10 $\mu$m, more preferably 10 nm to 1000 nm, still more preferably 50 nm to 300 nm, particularly preferably 70 nm to 280 nm. The average particle size of the colloidal particles is 0.01 $\mu$m or more, whereby cohesive force between the surfaces of the adjacent colloidal particles decreases, resulting in a tendency to facilitate even dispersion of the colloidal particles in a dispersion liquid to be described later. The average particle size of the colloidal particles is 10 $\mu$m or less, whereby sedimentation of the colloidal particles is suppressed, resulting in a tendency to facilitate the even dispersion of the colloidal particles in the dispersion liquid. Note that, in this description, the average particle size of the colloidal particles can be obtained by observing the surfaces of the colloidal structure 10 by a scanning electron microscope and measuring particle sizes of the plurality of colloidal particles.

As mentioned above, the colloidal structure 10 includes the plurality of types of the colloidal particles, and the colloidal particles include at least the first colloidal particles 1 and the second colloidal particles 2. Then, preferably, a coefficient of variation of the particle size of each of the first colloidal particles 1 and the second colloidal particles 2 is less than 20%. The coefficient of variation of the particle size is a value obtained by Equation 1, and a smaller value thereof means a smaller variation of the particle size.

$$[\text{coefficient of variation (\%)}] = [\text{standard deviation of particle size}] / [\text{average particle size}] \times 100 \qquad [\text{Equation 1}]$$

The coefficient of variation of the particle size of each of the first colloidal particles 1 and the second colloidal particles 2 is less than 20%, whereby it becomes easy for the first colloidal particles 1 and the second colloidal particles 2 to form the regular array in the matrix 3. Therefore, the obtained colloidal structure 10 becomes capable of reflecting the applied light highly efficiently. Note that the coefficient of variation of the particle size of each of the first colloidal particles 1 and the second colloidal particles 2 is more preferably less than 15%, still more preferably less than 12%, particularly preferably less than 10%, most preferably less than 8%.

Note that the plurality of types of the colloidal particles may include third colloidal particles, fourth colloidal particles, which have different average particle sizes, as well as the first colloidal particles 1 and the second colloidal particles 2. Then, preferably, a coefficient of variation of particle size of each of the third colloidal particles and the fourth colloidal particles is less than 20%.

In the colloidal structure 10, the average particle sizes of the first colloidal particles 1 and the second colloidal particles 2 are different from each other. Then, as illustrated in Fig. 1, in the colloidal structure 10, the average particle size of the first colloidal particles 1 is larger than the average particle size of the second colloidal particles 2. As described above, the first colloidal particles 1 and the second colloidal particles 2, which are different in particle size from each other, adopt the regular array, whereby it is possible to obtain such a colloidal structure 10 capable of adjusting a reflection peak wavelength in a reflection spectrum while suppressing a decrease of light reflectivity. The regular array adopted by the first colloidal particles 1 and the second colloidal particles 2 is, a close-packed structure, a face-centered cubic structure or a body-centered cubic structure.

Here, as mentioned above, heretofore, a method of changing a concentration of colloidal particles in a colloidal crystal film has been known as a method of changing the reflection peak wavelength in the reflection spectrum. However, when the concentration of the colloidal particles in the colloidal crystal film is changed, there is a possibility that it may become difficult to maintain the regular arrangement structure of the colloidal particles to reduce the light reflectivity of the colloidal crystal film to a great extent.

In contrast, in the colloidal structure 10, a content ratio and/or particle sizes of the first colloidal particles 1 and the second colloidal particles 2 are adjusted while maintaining the regular arrangement structure of the colloidal particles, whereby the reflection peak wavelength can be shifted. Therefore, the colloidal structure 10 becomes capable of adjusting the reflection peak by such a simple method though having high light reflectivity.

Preferably, the colloidal structure 10 of the present embodiment forms a colloidal solid solution in which a plurality of types of colloidal particles are mixed with each other to form a colloidal crystal. In this description, "colloidal solid solution" refers to one in which a plurality of types of colloidal particles are formed into a colloidal crystal in a mixed state to be provided with a crystal structure similar to a solid solution. That is, as illustrated in Fig. 1, "colloidal solid solution" refers to one in which the first colloidal particles 1 and the second colloidal particles 2 form a regular array in a mixed state and constitute an assembly like a solid solution. Note that the colloidal structure 10 can be said to be a structure in which, while the first colloidal particles 1 which form a regular array are maintaining the regular array, the second colloidal particles 2 are substituted for a part of the first colloidal particles 1. Alternatively, the colloidal structure 10 can be said to be a structure in which, while the second colloidal particles 2 which form the regular array are maintaining the regular array, the first colloidal particles 1 are substituted for a part of the second colloidal particles 1. The colloidal structure 10 includes such a colloidal solid solution, whereby there can be obtained a colloidal crystal having characteristics different from a colloidal crystal in which characteristics of a colloidal crystal made of the first colloidal particles 1 and characteristics of a colloidal crystal made of the second colloidal particles 2 are simply combined with each other. That is, the colloidal structure 10 can constitute a structure having an intermediate property between the colloidal crystal made of the first colloidal particles 1 and the colloidal crystal made of the second colloidal particles 2.

Specifically, the colloidal structure 10 can have a reflection peak between a reflection peak of the colloidal crystal made of the first colloidal particles and a reflection peak of the colloidal crystal made of the second colloidal particles. As mentioned above, the colloidal structure 10 can change the reflection peak wavelength by adjusting the content ratio and/or particle sizes of the first colloidal particles 1 and the second colloidal particles 2. Therefore, adjustment of these makes it possible to shift the reflection peak to an arbitrary position between the reflection peak of the colloidal crystal made of the first colloidal particles and the reflection peak of the colloidal crystal made of the second colloidal particles.

As mentioned above, in the colloidal structure 10, preferably, the first colloidal particles 1 and the second colloidal particles 2 are mixed to constitute the assembly like a solid solution. In other words, preferably, such a eutectic state as illustrated in Fig. 2 is not formed, which is made in such a manner that a colloidal crystal made of colloidal particles 11 having a large particle size and a colloidal crystal made of colloidal particles 12 having a small particle size are mixed with each other. In this case, there appears a reflection peak that results from the colloidal crystal made of the colloidal particles 11 and a reflection peak that results from the colloidal crystals made of the colloidal particles 12, causing a possibility that it may become difficult to shift the reflection peak to an arbitrary position. Therefore, in the colloidal structure 10, preferably, the plurality of types of the colloidal particles constitute the regular arrangement structure like a solid solution.

Here, the reflection peak wavelength of the colloidal crystal containing only the first colloidal particles 1 as colloidal particles is defined as $\lambda 1$, and the reflection peak wavelength of the colloidal crystal containing only the second colloidal particles 2 as colloidal particles is defined as $\lambda 2$. In this case, in the colloidal structure 10, preferably, the reflection peak wavelength $\lambda$ of the reflection spectrum is present between $\lambda 1$ and $\lambda 2$. Thus, the content ratio and/or particle sizes of the first colloidal particles 1 and the second colloidal particles 2 are adjusted, whereby the reflection peak wavelength $\lambda$ can be shifted to an arbitrary position between $\lambda 1$ and $\lambda 2$. Therefore, it becomes possible to adjust the reflection peak wavelength $\lambda$ in the colloidal structure 10 by such a simple method.

Moreover, preferably, an absolute value ($|\lambda 1-\lambda 2|$) of a difference between the above-mentioned $\lambda 1$ and $\lambda 2$ is 20 nm or more and 200 nm or less. In this case, it becomes easy for the first colloidal particles 1 and the second colloidal particles 2 to be mixed and form the regular array. Therefore, it becomes possible to easily form the colloidal solid solution containing the first colloidal particles 1 and the second colloidal particles 2, and to shift the reflection peak wavelength $\lambda$ to an arbitrary position between $\lambda 1$ and $\lambda 2$.

In the colloidal structure 10, when the average particle size of the first colloidal particles 1 is d1, and the average particle size of the second colloidal particles 2 is d2, then preferably, a ratio d1/d2 of the average particle sizes is 1.05 or more and less than 1.60. In this case, it becomes easy for the first colloidal particles 1 and the second colloidal particles 2 to be mixed and form the regular array. Therefore, it becomes possible to easily form the colloidal solid solution containing the first colloidal particles 1 and the second colloidal particles 2, and to shift the reflection peak to an arbitrary position.

In the colloidal structure 10, a center-to-center distance d between the adjacent colloidal particles is preferably 100 nm or more and 300 nm or less, more preferably 140 nm or more and 300 nm or less. As will be described later, in the case of using the colloidal structure 10 for an optical filter and a color material, a desired wavelength can be reflected by adjusting the center-to-center distance d of the colloidal particles. Note that the center-to-center distance d between the adjacent colloidal particles can be obtained by observing the surface of the colloidal structure 10 by a scanning electron microscope.

In the colloidal structure 10, preferably, a ratio of a volume of the colloidal particles with respect to a volume of the matrix 3 is 20% by volume or more and 50% by volume or less. Note that "volume of the colloidal particles" refers to a volume of the whole of the colloidal particles including the first colloidal particles 1 and the second colloidal particles 2. Such a volume ratio is 20% by volume or more, whereby the plurality of types of the colloidal particles are arrayed three-dimensionally in a regular manner in the matrix 3, and it becomes possible to further enhance the light reflectivity of the colloidal structure 10. Moreover, this volume ratio is 50% by volume or less, thus making it possible to easily control the three-dimensional regular array to be formed in the matrix 3. Moreover, the volume ratio is 20% by volume or more and 50% by volume or less, whereby a loosely packed colloidal crystal in which the plurality of types of the colloidal particles are spaced apart from one another is formed, and the matrix 3 can be interposed between the colloidal particles. Therefore, it becomes possible to further enhance shape stability of the colloidal structure 10.

As mentioned above, the colloidal structure 10 can reflect an arbitrary light component by adjusting the content ratio and/or particle sizes of the first colloidal particles 1 and the second colloidal particles 2. Therefore, in the colloidal structure 10, preferably, the reflection peak wavelength $\lambda$ of the reflection spectrum stays within a wavelength range of 300 nm or more and less than 800 nm. In this case, since the colloidal structure 10 exhibits reflection characteristics in the visible light range, the colloidal structure 10 becomes an industrially usable structure, for example, for an optical filter, a color material and the like. Note that, in the colloidal structure 10, more preferably, the reflection peak wavelength $\lambda$ of the reflection spectrum stays within a wavelength range of 450 nm or more and less than 650 nm.

In the colloidal structure 10, preferably, a maximum value of a reflectance in the wavelength range of 300 nm or more and less than 800 nm is 20% or more and less than 100%. In this case, the colloidal structure 10 can selectively reduce light intensity at the reflection peak wavelength $\lambda$ of the reflection spectrum, and therefore, becomes an industrially usable structure, for example, for an optical filter and the like.

More specifically, as mentioned above, the colloidal structure 10 can control a wavelength and intensity of the reflected light by adjusting the content ratio and/or particle sizes of the first colloidal particles 1 and the second colloidal particles 2. Then, not all of light within a specific wavelength range is reflected like a conventional light interference filter, but a part of the light within the specific wavelength range is reflected, whereby desired light can be taken out of the colloidal structure 10. For example, when all of the light within the specific wavelength range is reflected, light that has passed through the colloidal structure 10 goes away from natural white light, but a part of the light within the specific wavelength range is reflected, whereby color rendering properties can be enhanced while maintaining natural white light. Note that, in the colloidal structure 10, the maximum value of the reflectance in the wavelength range of 300 nm or more and less than 800 nm is preferably 20% to 95%, more preferably 20% to 80%.

In the case of using the colloidal structure 10 as an optical filter to be described later, in the colloidal structure 10, preferably, a full width at half maximum (FWHM) of a peak of a reflection spectrum having the maximum reflectance in the wavelength range of 300 nm or more and less than 800 nm is 5 nm or more and 100 nm or less. The full width at half maximum tends to become smaller as a variation of a layer thickness of the colloidal structure 10, the array of the colloidal particles, and the like are controlled more and more precisely. Therefore, preferably, the full width at half maximum is set to 5 nm or more form a viewpoint of productivity. Moreover, the full width at half maximum is set to 100 nm or less, whereby, for example, a concern can be reduced that light with a wavelength, which is required to enhance the color rendering properties, may be reflected by the colloidal structure 10. Moreover, the full width at half maximum is set to 100 nm or less, whereby light emission efficiency can be suppressed from being reduced in a light emitting device including the colloidal structure 10. Note that, more preferably, the full width at half maximum is 10 nm to 60 nm.

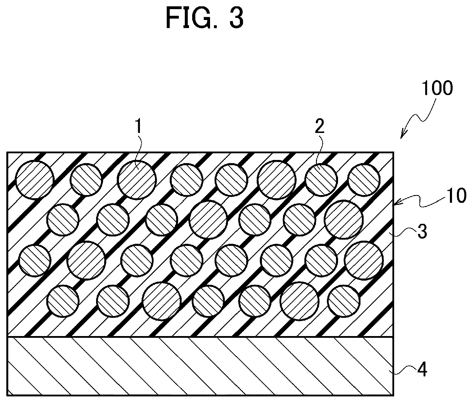

As illustrated in Fig. 3, the colloidal structure 10 according to the present embodiment may form a structural object 100 by being supported by a substrate 4. In other words, the structural object 100 includes the colloidal structure 10, and the substrate 4 that supports the colloidal structure 10. The colloidal structure 10 is supported by the substrate 4, thus making it possible to enhance handleability and mechanical strength of the colloidal structure 10. Note that, though the colloidal structure 10 may contact the surface of the substrate 4 as illustrated in Fig. 3, an interposing layer (not shown) may be disposed between the colloidal structure 10 and the substrate 4.

Preferably, the substrate 4 has high translucency. For example, a total light transmittance of the substrate 4 is preferably 80% to 100%, more preferably 85% to 100%. The total light transmittance can be measured by, for example, a method such as Japanese Industrial Standard JIS K 7361-1: 1997 (ISO 13468-1: 1996) (Plastics-Determination of the total luminous transmittance of transparent materials-Part 1: Single beam instrument).

As the substrate 4, for example, a plate of glass such as soda-lime glass, low-alkali borosilicate glass, and non-alkali-alumino borosilicate glass can be used. Moreover, as the substrate 4, a plate of resin such as polycarbonate, acrylic resin, and polyethylene terephthalate can be used.

In the structural object 100, a shape of the colloidal structure 10 is not particularly limited, and for example, can be formed into a film shape. Moreover, a thickness of the colloidal structure 10 is not particularly limited, but for example, preferably 10 $\mu$m to 5000 $\mu$m, more preferably 1000 $\mu$m to 3000 $\mu$m. Note that a shape of an outermost surface of the colloidal structure 10 is not particularly limited, and may be smooth and even, or may have a fine irregular shape resulting from the colloidal particles.

In the structural object 100, an area of the colloidal structure 10 is not particularly limited, but preferably, is set to 5 mm$^2$ or more and 100 cm$^2$ or less. In this case, it becomes possible to apply the structural object 100 to a wide range of uses from various sensors to a large lighting apparatus.

As described above, the colloidal structure 10 of the present embodiment includes the plurality of types of the colloidal particles, and the matrix 3 that fixes the colloidal particles. The plurality of types of the colloidal particles include at least the first colloidal particles 1 and the second colloidal particles 2, which are different in average particle size from each other. The coefficient of variation of the particle size of each of the first colloidal particles 1 and the second colloidal particles 2 is less than 20%. Then, the plurality of types of the colloidal particles form the regular array in the matrix 3.

The colloidal structure 10 of the present embodiment fixes the colloidal particles by the matrix 3, thereby forming the loosely packed colloidal crystal. Therefore, a part of light applied to the colloidal structure 10 can cause Bragg reflection, and a part of light that is not reflected can pass through the colloidal structure 10. Then, the colloidal structure 10 can shift the reflection peak wavelength by adjusting the content ratio and/or particle sizes of the first colloidal particles 1 and the second colloidal particles 2. Therefore, the colloidal structure 10 becomes capable of adjusting the reflection peak by the simple method though maintaining high light reflectivity. Note that, preferably, the regular array in the colloidal structure 10 is, for example, a close-packed structure, a face-centered cubic structure or a body-centered cubic structure.

Preferably, the colloidal structure 10 further forms a colloidal solid solution in which a plurality of types of colloidal particles are mixed with each other to form a colloidal crystal. Thus, the structure is formed, which has an intermediate property between the colloidal crystal made of the first colloi dal particles 1 and the colloidal crystal made of the second colloidal particles 2. Therefore, the content ratio and/or particle sizes of the first and second colloidal particles are adjusted, whereby the reflection peak can be provided at an arbitrary position between the reflection peak of the colloidal crystal made of the first colloidal particles and the reflection peak of the colloidal crystal made of the second colloidal particles.

Note that, in the colloidal structure 10, the colloidal particles are fixed by the matrix 3, and accordingly, it is preferable that the adjacent colloidal particles be spaced apart from one another as illustrated in Fig. 1. Thus, the colloidal structure 10 becomes the loosely packed colloidal crystal, and accordingly, can exert high light reflectivity. However, all of the colloidal particles do not need to be spaced apart from one another, and the colloidal structure 10 can exert the above-described effect even if the colloidal particles partially contact one another.

Note that, as for the colloidal structure 10 of the present embodiment, a part of the light applied thereto can cause Bragg reflection, and a part of the light that is not reflected can pass therethrough. Therefore, the colloidal structure 10 can be applied as an optical member that controls at least one of transmission, reflection or diffraction of light. Specifically, the colloidal structure 10 can be applied, for example, to a color material, an optical memory material, a display device, an optical switch, a sensor and the like. Moreover, as will be described later, the colloidal structure 10 can be used as an optical filter of a light emitting device or an illumination system.

If the colloidal particles are capable of adopting a highly three-dimensional regular array in the colloidal structure 10, the colloidal structure 10 can exert a property as a photonic crystal. Therefore, the colloidal structure 10 as described above can be used as an optical member using a confinement effect for light having a specific frequency or a frequency conversion effect based on a complicated photonic band structure, both of the effects being properties of the photonic crystal.

Moreover, as mentioned above, the colloidal structure 10 can be used as a color material, and accordingly, the colloidal structure 10 can be applied to a building material or an ornament.

Next, a description will be given of a method for producing a colloidal structure according to the present embodiment. Note that a plurality of types of colloidal particles, first colloidal particles, second colloidal particles and a matrix are the same as those described in the colloidal structure mentioned above, and accordingly, a description thereof will be omitted.

In the method for producing a colloidal structure, first, the plurality of types of the colloidal particles including at least the first colloidal particles and the second colloidal particles are dispersed together with at least one type of a monomer, whereby a colloidal dispersion liquid is prepared. Specifically, the plurality of types of the colloidal particles are added to a monomer that forms the matrix 3 by polymerization. At this time, a liquid matter can be used as the monomer, and powdery matters can be used as the colloidal particles. A method for dispersing the colloidal particles into the monomer is not particularly limited, and for example, the colloidal particles can be dispersed by stirring and ultrasonic irradiation.

At the time of preparing the colloidal dispersion liquid containing the plurality of types of the colloidal particles, the colloidal dispersion liquid may be prepared by adding powder of the first colloidal particles and powder of the second colloidal particles to the monomer after individually weighing these. However, it is sometimes cumbersome to weigh such fine powders every time of producing the colloidal structure. Therefore, in the present embodiment, the colloidal dispersion liquid containing the plurality of types of the colloidal particles may be prepared by mixing a first colloidal dispersion liquid into which the first colloidal particles are dispersed and a second colloidal dispersion liquid into which the second colloidal particles are dispersed with each other. That is, the first colloidal dispersion liquid obtained by adding and dispersing the powder of the first colloidal particles into the monomer and the second colloidal dispersion liquid obtained by adding and dispersing the powder of the second colloidal dispersion liquid into the monomer are prepared in advance. Subsequently, the first colloidal dispersion liquid and the second colloidal dispersion liquid are weighed according to a content ratio of the first colloidal particles and the second colloidal particles. Then, the first colloidal dispersion liquid and the second colloidal dispersion liquid, which are thus weighed, are mixed with each other, whereby a colloidal dispersion liquid containing the plurality of types of the colloidal particles can be obtained.

Note that, in the case of polymerizing the monomer by an active energy ray, a photopolymerization initiator may be added to the colloidal dispersion liquid. As the photopolymerization initiator, a well-known photopolymerization initiator such as a radical photopolymerization initiator, a cation photopolymerization initiator, and an anion photopolymerization initiator can be used.

Next, the obtained colloidal dispersion liquid is applied onto a substrate, and a coating film is generated. A method for applying the colloidal dispersion liquid is not particularly limited; however, for example, a spray coating method, a spin coating method, a slit coating method, a roll coating method and the like can be used. Note that the coating film is left standing after the coating film is generated, whereby the colloidal particles are arrayed three-dimensionally and regularly.

Then, the monomer in the coating film is polymerized, whereby the plurality of types of the colloidal particles are fixed by a polymer. A method for polymerizing the monomer is not particularly limited, and the monomer may be polymerized by heating, or may be polymerized by an active energy ray (electromagnetic wave, ultraviolet ray, visible light, infrared ray, electron beam, $\gamma$ ray and the like). By such steps as described above, the colloidal structure in which the plurality of types of the colloidal particles are arrayed regularly in the matrix can be obtained.

As described above, the method for producing a colloidal structure includes a dispersion liquid preparation step of preparing a colloidal dispersion liquid by dispersing a plurality of types of colloidal particles including at least first colloidal particles and second colloidal particles, which are different in average particle size from each other, together with at least one type of a monomer. This production method further includes: a coating film generation step of generating a coating film by applying a colloidal dispersion liquid onto a substrate; and a polymerization step of polymerizing the monomer in the coating film to fix the plurality of types of the colloidal particles by a polymer. In the polymerization step, the plurality of types of the colloidal particles form a regular array in the polymer. Then, a coefficient of variation of particle size of each of the first colloidal particles and the second colloidal particles is less than 20%.

As heretofore, in the case of adjusting the reflection peak by changing the concentration of the colloidal particles in the colloidal crystal film, the fine powder that constitutes the colloidal particles needs to be weighed every time of producing the colloidal crystal film, and accordingly, a production process becomes complicated. However, in the method for producing the colloidal structure of the present embodiment, the colloidal dispersion liquid containing the plurality of types of the colloidal particles is obtained by mixing the first colloidal dispersion liquid and the second colloidal dispersion liquid, which are prepared in advance, with each other. Therefore, it becomes possible to obtain the colloidal structure by a simpler method than heretofore.

[Multi-colloidal structure]

Next, a detailed description will be given of the multi-colloidal structure according to the present embodiment with reference to the drawings. Note that the same reference numerals will be assigned to the same constituents as those of the above-mentioned colloidal structure, and a duplicate description will be omitted.

As mentioned above, the colloidal structure 10 of the present embodiment includes: the plurality of types of the colloidal particles; and the matrix 3 that fixes the colloidal particles, and further, the plurality of types of the colloidal particles form the regular array in the matrix 3. As mentioned above, the colloidal structure 10 can shift the reflection peak wavelength by adjusting the content ratio and/or particle sizes of the first colloidal particles 1 and the second colloidal particles 2. Therefore, the colloidal structure 10 becomes capable of adjusting the reflection peak by the simple method though maintaining high light reflectivity.

Here, in the case of attempting to increase the thickness of the colloidal structure 10 in order to enhance the light reflectivity, self-organization of the colloidal particles becomes difficult, and accordingly, the regular array by the colloidal particles may not be formed. Then, when the regular array by the colloidal particles is not formed, it is apprehended that it may become difficult to obtain desired reflection characteristics.

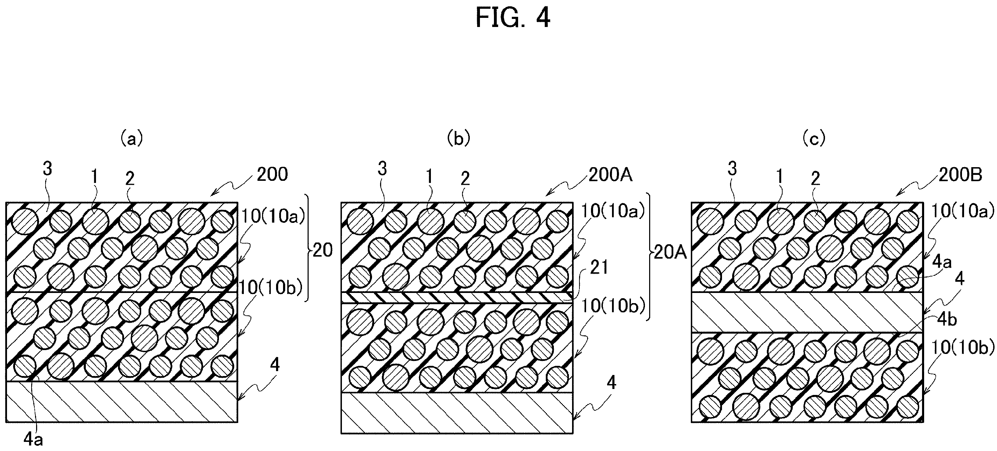

Therefore, the present embodiment is characterized in that a plurality of layers of such colloidal structures 10 are laminated on one another. Specifically, as illustrated in Fig. 4(a), a multi-colloidal structure 20 includes the plurality of colloidal structures 10, and further, has the plurality of colloidal structures 10 laminated on one another. As mentioned above, the colloidal structures 10 have desired reflection characteristics, and therefore, the colloidal structures 10 are laminated on one another, whereby an optical member with high reflectance (for example, 50% or more), which has not been obtainable with a structure in which a single layer is increased in thickness, can be obtained. Moreover, such colloidal structures 10 having regular arrays different from one another are laminated on one another, whereby an optical member capable of reflecting light with a plurality of wavelengths can be obtained.

In the multi-colloidal structure 20 of the present embodiment, the plurality of colloidal structures 10 thus laminated on one another can be configured to have reflection characteristics different from one another. That is, with regard to the multi-colloidal structure, in two colloidal structures selected from the plurality of colloidal structures, preferably, a difference between a peak wavelength of a reflection spectrum of one of the colloidal structures and a peak wavelength of a reflection spectrum of the other colloidal structure exceeds 10 nm.

Specifically, in the multi-colloidal structure 20 illustrated in Fig. 4(a), preferably, a colloidal structure 10a and a colloidal structure 10b have regular arrays different from each other. Then, preferably, a difference between a peak wavelength of the reflection spectrum of the colloidal structure 10a and a peak wavelength of a reflection spectrum of the colloidal structure 10b exceeds 10 nm. Thus, the multi-colloidal structure 20 combines the reflection characteristics inherent in the colloidal structure 10a and the reflection characteristics inherent in the colloidal structure 10b with each other, and accordingly, an optical member in which it is easy to increase a variety of reflection characteristics can be obtained. Moreover, the colloidal structure 10a and the colloidal structure 10b have reflection characteristics different from each other, whereby such a multi-colloidal structure 20 capable of reflecting light with two wavelengths can be obtained.

In the multi-colloidal structure 20 of the present embodiment, the plurality of colloidal structures 10 thus laminated on one another can be configured to have reflection characteristics substantially equal to one another. That is, with regard to the multi-colloidal structure, in two colloidal structures selected from the plurality of colloidal structures, preferably, such a difference between a peak wavelength of a reflection spectrum of one of the colloidal structures and a peak wavelength of a reflection spectrum of the other colloidal structure is 10 nm or less.

Specifically, in the multi-colloidal structure 20 illustrated in Fig. 4(a), preferably, the colloidal structure 10a and the colloidal structure 10b have almost the same regular arrays. Then, preferably, the difference between the peak wavelength of the reflection spectrum of the colloidal structure 10a and the peak wavelength of the reflection spectrum of the colloidal structure 10b is 10 nm or less. Thus, in the multi-colloidal structure 20, the reflection characteristics inherent in the colloidal structure 10a and the reflection characteristics inherent in the colloidal structure 10b become almost the same, and accordingly, an optical member in which reflectance is increased can be obtained. Note that, in two colloidal structures 10 selected from the plurality of colloidal structures 10, more preferably, the difference between the peak wavelength of the reflection spectrum of one of the colloidal structures and the peak wavelength of the reflection spectrum of the other colloidal structure is 5 nm or less.

As illustrated in Fig. 4(a), the multi-colloidal structure 20 according to the present embodiment may form a multi-structural object 200 by being supported by the substrate 4. In other words, the multi-structural object 200 includes the multi-colloidal structure 20, and the substrate 4 that supports the multi-colloidal structure 20. Thus, strength of the multi-colloidal structure 20 is improved, and accordingly, it becomes possible to enhance handleability of the multi-colloidal structure 20. Moreover, in the case of providing the plurality of colloidal structures 10 on the substrate 4, and further coating the colloidal structures 10 with a protective film, the protective film just needs to be provided on only one surface 4a in such a configuration as illustrated in Fig. 4(a). Therefore, it becomes possible to simplify a production process of the multi-structural object 200.

As illustrated in Fig. 4(b), a multi-colloidal structure 20A of the present embodiment may provide an adhesive layer 21 between the adjacent colloidal structures 10, that is, between the colloidal structure 10a and the colloidal structure 10b. Thus, adhesion between the colloidal structures 10 is enhanced, thus making it possible to suppress peeling of the colloidal structures 10. Moreover, the multi-colloidal structure 20A may form a multi-structural object 200A by being supported by the substrate 4. Note that, though not shown, the adhesive layer 21 may be provided between the colloidal structure 10b and the substrate 4.

A material that constitutes the adhesive layer 21 is not particularly limited; however, it is preferable to use a material having a refractive index approximate to that of the matrix 3 of each of the colloidal structures 10. Thus, Fresnel reflection between the colloidal structures 10 and the adhesive layer 21 is suppressed, thus making it possible to enhance transmittance of light with a specific wavelength. Note that, as the adhesive layer, for example, an acrylic adhesive containing acrylic resin can be used.

As mentioned above, the multi-structural object 200 can provide the multi-colloidal structure 20 on only the one surface 4a of the substrate 4. However, the present embodiment is not limited to such a configuration, and as illustrated in Fig. 4(c), the colloidal structures 10 may be provided on both of the one surface 4a of the substrate 4 and the other surface 4b opposite to the one surface 4a. As described above, in the multi-structural object 200B, the plurality of colloidal structures 10 are arranged on both surfaces of the substrate 4, whereby strength of the multi-structural object 200B is improved, thus making it possible to enhance handleability thereof. Moreover, both of the one surface 4a and other surface 4b of the substrate 4 are flat surfaces. Therefore, in the colloidal structures 10 provided on the surface 4a and the surface 4b, which are flat, it becomes easy for the first colloidal particles 1 and the second colloidal particles 2 to form such regular arrays, and accordingly, it becomes possible to enhance desired reflectance of light. Moreover, the same constituent materials are used between the colloidal structures 10a and 10b, whereby linear expansion coefficients of the colloidal structures 10a and 10b can be made almost equal to each other. Therefore, the colloidal structures 10 are provided on both of the surface 4a and surface 4b of the substrate 4, thus making it possible to suppress a warp of the multi-structural object 200B.

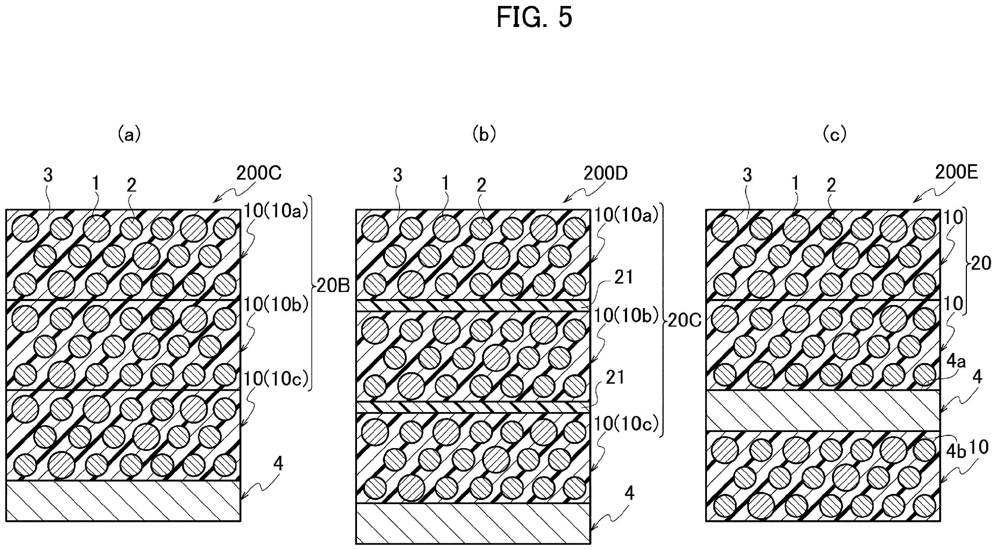

As mentioned above, the multi-colloidal structure of the present embodiment includes the plurality of colloidal structures 10. Therefore, the multi-colloidal structure is not limited to such a configuration including two colloidal structures 10 as illustrated in Fig. 4(a) and Fig. 4(b), but can be configured to include three colloidal structures 10 as illustrated in Fig. 5(a) and Fig. 5(b). Moreover, though not shown, the multi-colloidal structure can also be configured to include four or more colloidal structures 10.

Specifically, as illustrated in Fig. 5(a), a multi-colloidal structure 20B can be configured to laminate colloidal structures 10a, 10b and 10c on one another. Note that, in Fig. 5(a), a configuration is formed, in which adhesive layers are not provided between the colloidal structure 10a and the colloidal structure 10b and between the colloidal structure 10b and the colloidal structure 10c, but the colloidal structures contact one another. Moreover, the colloidal structure 10a, the colloidal structure 10b and the colloidal structure 10c may be configured to have reflection characteristics different from one another, or may be configured to have substantially equal reflection characteristics. Note that, as illustrated in Fig. 5(a), the multi-colloidal structure 20B may form a multi-structural object 200C by being supported by the substrate 4.

As in Fig. 5(b), a multi-colloidal structure 20C can be configured to include the colloidal structures 10a, 10b and 10c, and to provide the adhesive layers 21 between the colloidal structure 10a and the colloidal structure 10b and between the colloidal structure 10b and the colloidal structure 10c. Note that, as illustrated in Fig. 5(b), the multi-colloidal structure 20C may form a multi-structural object 200D by being supported by the substrate 4. Moreover, as illustrated in Fig. 5(c), the multi-colloidal structure 20 is laminated on the one surface 4a of the substrate 4, and the colloidal structure 10 is laminated on the other surface 4b thereof, whereby a multi-structural object 200E can also be formed.

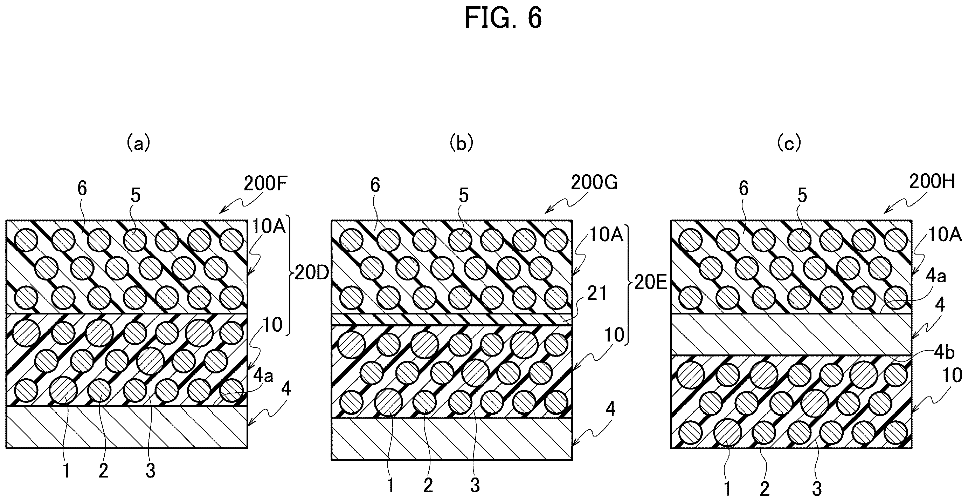

As mentioned above, the multi-colloidal structure 20 has a configuration in which the plurality of colloidal structures 10 are laminated on one another. However, the multi-colloidal structure of the present embodiment is not limited to such a configuration, and for example, such a configuration as illustrated in Fig. 6(a) can also be adopted. The multi-colloidal structure 20D includes the colloidal structure 10 and a colloidal crystal body 10A. The colloidal crystal body 10A includes only one type of colloidal particles 5 and a matrix 6 that fixes the only one type of colloidal particles 5, in which the only one type of colloidal particles 5 form a regular array in the matrix 6. Thus, the multi-colloidal structure 20 combines the reflection characteristics inherent in the colloidal structure 10 and reflection characteristics inherent in the colloidal crystal body 10A with each other, and accordingly, an optical member in which it is easy to increase a variety of reflection characteristics can be obtained.

As mentioned above, the colloidal structure 10 includes at least the first colloidal particles 1 and the second colloidal particles 2, and further, the average particle sizes of these are different from each other. In contrast, the colloidal crystal body 10A includes only one type of the colloidal particles 5. Like the colloidal structure 10, the colloidal crystal body 10A does not have the closely packed colloidal crystal formed in such a manner that the colloidal particles 5 contact one another, but has a loosely packed colloidal crystal in which the colloidal particles 5 are spaced apart from one another. Such a loosely packed colloidal crystal as described above is provided, whereby a part of light applied to the colloidal crystal body 10A can cause Bragg reflection, and a part of light that is not reflected can pass through the colloidal crystal body 10A. Note that, like the colloidal structure 10, preferably, the regular array adopted by the colloidal particles 5 in the matrix 6 is, for example, a close-packed structure, a face-centered cubic structure or a body-centered cubic structure.

As in the colloidal structure 10, preferably, the colloidal particles 5 included in the colloidal crystal body 10A contain at least one of an inorganic material or a resin material. Moreover, the colloidal particles 5 may be formed of only an inorganic material, or may be formed of only a resin material, or may be formed of both of an inorganic material and a resin material.

An average particle size of the colloidal particles 5 is preferably 0.01 μm to 10 μm, more preferably 10 nm to 1000 nm, still more preferably 50 nm to 300 nm, particularly preferably 70 nm to 280 nm. Moreover, preferably, a coefficient of variation of the particle size of the colloidal particles 5 is less than 20%. Thus, it becomes easy for the colloidal particles 5 to form the regular array in the matrix 6. Note that the coefficient of variation of the particle size of the colloidal particles 5 is more preferably less than 15%, still more preferably less than 12%, particularly preferably less than 10%, most preferably less than 8%.

In the colloidal crystal body 10A, preferably, the matrix 6 that fixes the colloidal particles 5 contains resin like the colloidal structure 10. The same ones as those described for the colloidal structure 10 can be used for the inorganic material and the resin material, which constitute the colloidal particles 5, and the resin that constitutes the matrix 6.

In the multi-colloidal structure 20D of the present embodiment, the colloidal structure 10 and the colloidal crystal body 10A, which are laminated on each other, can be configured to have reflection characteristics different from each other. That is, with regard to the multi-colloidal structure 20D, preferably, a difference between a peak wavelength of a reflection spectrum of the colloidal structure 10 and a peak wavelength of a reflection spectrum of the colloidal crystal body 10A exceeds 10 nm. Thus, the multi-colloidal structure 20D combines the reflection characteristics inherent in the colloidal structure 10 and reflection characteristics inherent in the colloidal crystal body 10A with each other, and accordingly, an optical member in which it is easy to increase a variety of reflection characteristics can be obtained. Moreover, the colloidal structure 10 and the colloidal crystal body 10A have reflection characteristics different from each other, whereby such a multi-colloidal structure 20D capable of reflecting light with two wavelengths can be obtained.

In the multi-colloidal structure 20D, the colloidal structure 10 and the colloidal crystal body 10A, which are laminated on each other, can be configured to have reflection characteristics substantially equal to each other. That is, with regard to the multi-colloidal structure 20D, preferably, the difference between the peak wavelength of the reflection spectrum of the colloidal structure 10 and the peak wavelength of the reflection spectrum of the colloidal crystal body 10A is 10 nm or less. Moreover, more preferably, the difference between the peak wavelength of the reflection spectrum of the colloidal structure 10 and the peak wavelength of the reflection spectrum of the colloidal crystal body 10A is 5 nm or less. Thus, in the multi-colloidal structure 20D, the reflection characteristics inherent in the colloidal structure 10 and the reflection characteristics inherent in the colloidal crystal body 10A become almost the same, and accordingly, an optical member in which reflectance is increased can be obtained.

Note that the colloidal crystal body 10A can shift the reflection peak wavelength in the reflection spectrum by changing at least one of the material of the colloidal particles 5, the material of the matrix 6, the concentration of the colloidal particles 5, or the average particle size of the colloidal particles 5. Therefore, by adjusting these, the difference between the peak wavelength of the reflection spectrum of the colloidal structure 10 and the peak wavelength of the reflection spectrum of the colloidal crystal body 10A can be kept within the above-described range.

The multi-colloidal structure 20D illustrated in Fig. 6(a) is configured so that an upper layer thereof is the colloidal crystal body 10A and a lower layer thereof is the colloidal structure 10. However, the multi-colloidal structure 20D is not limited to such a configuration, and the upper layer may be the colloidal structure 10, and the lower layer may be the colloidal crystal body 10A.

As illustrated in Fig. 6(a), the multi-colloidal structure 20D may form a multi-structural object 200F by being supported by the substrate 4. In other words, the multi-structural object 200F includes the multi-colloidal structure 20D, and the substrate 4 that supports the multi-colloidal structure 20D. Thus, strength of the multi-colloidal structure 20D is improved, and accordingly, it becomes possible to enhance handleability of the multi-colloidal structure 20D.

As illustrated in Fig. 6(b), a multi-colloidal structure 20E may provide an adhesive layer 21 between the colloidal structure 10 and the colloidal crystal body 10A. Thus, adhesion between the colloidal structure 10 and the colloidal crystal body 10A is enhanced, thus making it possible to suppress peeling thereof. Note that the multi-colloidal structure 20E may form a multi-structural object 200G by being supported by the substrate 4.

As in the multi-structural object 200F illustrated in Fig. 6(a), the multi-colloidal structure 20D can be provided on only the one surface 4a of the substrate 4. However, the present embodiment is not limited to such a configuration. As in a multi-structural object 200H illustrated in Fig. 6(c), the colloidal crystal body 10A may be provided on the one surface 4a of the substrate 4, and the colloidal structure 10 may be provided on the other surface 4b opposite to the one surface 4a.

The multi-colloidal structure in which the colloidal structure 10 and the colloidal crystal body 10A are laminated on each other is not limited to such a configuration in which the colloidal structure 10 and the colloidal crystal body 10A are laminated one by one on each other as illustrated in Fig. 6. For example, the multi-colloidal structure may have a configuration including a plurality of the colloidal structures 10 and/or a plurality of the colloidal crystal bodies 10A.

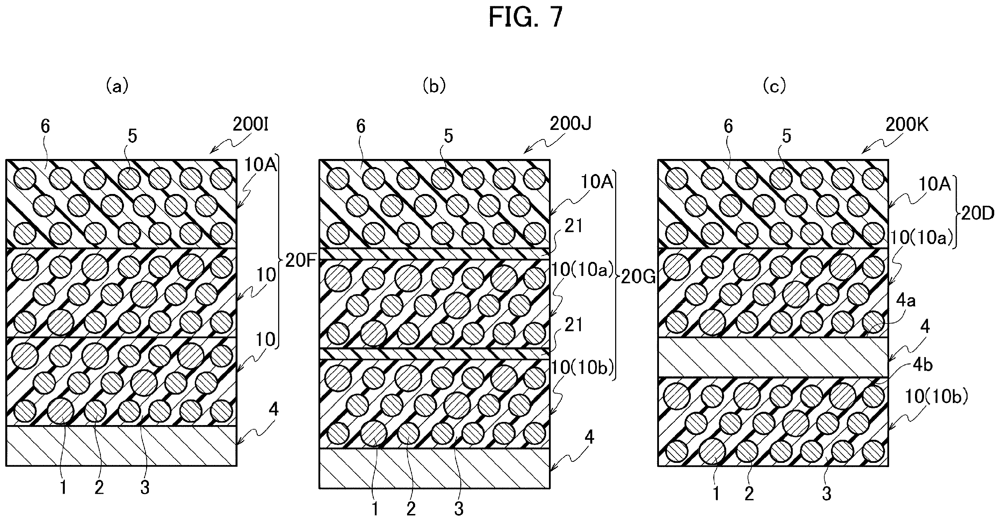

Specifically, as illustrated in Fig. 7(a), a multi-colloidal structure 20F can be given a configuration in which one layer of the colloidal crystal body 10A and two layers of the colloidal structures 10 are laminated on one another. Note that, as illustrated in Fig. 7(a), the multi-colloidal structure 20F may form a multi-structural object 2001 by being supported by the substrate 4. Moreover, as illustrated in Fig. 7(b), a multi-colloidal structure 20G includes one layer of the colloidal crystal body 10A and two layers of the colloidal structures 10. Then, the multi-colloidal structure 20G can be configured to provide the adhesive layers 21 between the colloidal crystal body 10A and the colloidal structure 10a and between the colloidal structure 10a and the colloidal structure 10b. Note that, as illustrated in Fig. 7(b), the multi-colloidal structure 20G may form a multi-structural object 200J by being supported by the substrate 4. Moreover, as illustrated in Fig. 7(c), one layer of the colloidal crystal body 10A and one layer of the colloidal structure 10a are laminated on the one surface 4a of the substrate 4, and the colloidal structure 10b is laminated on the other surface 4b, whereby a multi-structural object 200K can also be formed.

Note that, in Fig. 7, a lamination order of the colloidal crystal body 10A and the colloidal structures 10 is not particularly limited. For example, in the multi-colloidal structure 20F illustrated in Fig. 7(a), the colloidal crystal body 10A is not limited to an upper layer, and may be a middle layer, or may be a lower layer.

Next, a description will be given of a method for producing the multi-colloidal structure. Like the method for producing the colloidal structure 10, the method for producing a multi-colloidal structure according to the present embodiment first disperses a plurality of types of colloidal particles into a monomer of the matrix 3, and applies an obtained colloidal dispersion liquid on the substrate 4, and cures the same. Next, the colloidal dispersion liquid is further applied to a surface of the obtained colloidal structure 10 and is cured, whereby the multi-colloidal structure 20 can be obtained.

For example, the multi-colloidal structure 20 in which the colloidal structure 10a and the colloidal structure 10b have almost the same regular array can be obtained as follows. First, the plurality of types of the colloidal particles are dispersed into the monomer of the matrix 3, whereby a first colloidal dispersion liquid is prepared. Next, the obtained first colloidal dispersion liquid is applied to the substrate 4 and is cured, whereby the colloidal structure 10b is obtained. Next, the first colloidal dispersion liquid is applied to a surface of the colloidal structure 10b and is cured, whereby the colloidal structure 10a can be obtained.

Moreover, the multi-colloidal structure 20 in which the colloidal structure 10a and the colloidal structure 10b have regular arrays different from each other can be obtained as follows. First, a plurality of types of the colloidal particles are dispersed into a monomer of the matrix 3, whereby a first colloidal dispersion liquid is prepared. Likewise, a plurality of types of the colloidal particles are dispersed into a monomer of the matrix 3, whereby a second colloidal dispersion liquid is prepared. At this time, preferably, the first colloidal dispersion liquid and the second colloidal dispersion liquid differentiate at least one of the raw material of the matrix 3, the material of the colloidal particles, the concentration of the colloidal particles or the average particle size of the colloidal particles. Then, the first colloidal dispersion liquid is applied to the substrate 4 and is cured, whereby the colloidal structure 10b is obtained. Next, the second colloidal dispersion liquid is applied to the surface of the colloidal structure 10b and is cured, whereby the colloidal structure 10a can be obtained.

As described above, the multi-colloidal structure 20 of the present embodiment includes the plurality of colloidal structures 10. Therefore, an optical member with high reflectance, which has not been able to be obtained by a structure in which a single layer is increased in thickness, can be obtained. Moreover, such colloidal structures 10 having regular arrays different from one another are laminated on one another, whereby an optical member capable of reflecting light with a plurality of wavelengths can be obtained.

Moreover, in an optical filter in which a plurality of conventional thin film-shaped filters are simply laminated on one another, Fresnel reflection occurs on a surface of an outermost filter and interfaces between the respective filters. Therefore, though reflectance of a specific wavelength is improved, transmittances with other wavelengths are reduced to a great extent. However, the multi-colloidal structure 20 is prepared by repeating the step of applying and curing the colloidal dispersion liquid, and accordingly, the multi-colloidal structure 20 can reduce the Fresnel reflection on the interfaces between the respective colloidal structures 10 to a great extent. Moreover, as the matrix 3 in each of the colloidal structures 10, resin having a refractive index approximate to that of the colloidal structure 10 is used, thus making it possible to further reduce the Fresnel reflection.

[Light emitting device]

Next, a description will be given of a light emitting device according to the present embodiment. The light emitting device of the present embodiment includes light sources 31 and an optical filter 300 irradiated with primary light emitted by the light sources 31. The optical filter 300 includes at least one selected from the group consisting of the colloidal structure 10, the structural object 100, the multi-colloidal structure 20 and the multi-structural object 200. Then, a part of the primary light L1 emitted by the light sources 31 passes through the optical filter 300. The light emitting device includes the optical filter 300 as described above, and can thereby reflect light with a specific wavelength and radiate a desired light component.

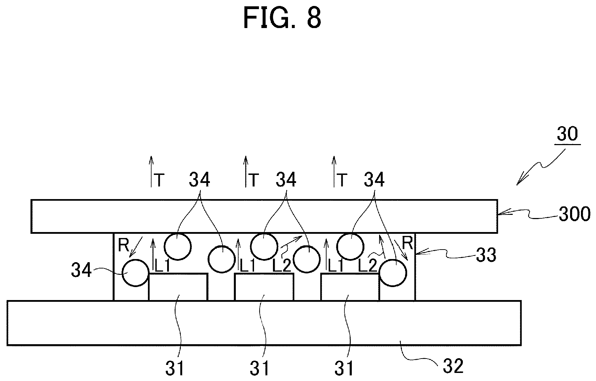

Fig. 8 illustrates a light-emitting diode module (LED module) 30 as an example of the light emitting device. In the present embodiment, the light sources 31 are light emitting elements made of LED elements and mounted on a circuit board 32; however, are not limited to these.

As each of the light emitting elements, for example, there can be used: a blue LED element that has a main light emission peak in a wavelength range of 380 nm to 500 nm and emits blue light; and a violet LED element that has a main light emission peak therein and emits a violet light. As such a light emitting element, for example, a gallium nitride LED element is mentioned.

The light emitting device according to the present embodiment includes the light sources 31 and the optical filter 300, but may further include a wavelength conversion member 33. Specifically, as illustrated in Fig. 8, the LED module 30 that is the light emitting device may further include the wavelength conversion member 33. In the present embodiment, the wavelength conversion member 33 covers the light sources 31. In a translucent material such as silicone resin, the wavelength conversion member 33 contains a phosphor 34 that is, for example, at least one of a blue phosphor, a green phosphor, a yellow phosphor or a red phosphor. The blue phosphor is excited by emitted light of the light sources 31, and emits blue light. The green phosphor and the yellow phosphor are also excited by the emitted light of the light sources 31, and emit green light and yellow light, respectively.

The blue phosphor has a light emission peak in a wavelength range of 470 nm to 500 nm, the green phosphor has a light emission peak in a wavelength range of 500 nm to 540 nm, and the yellow phosphor has a light emission peak in a wavelength range of 545 nm to 595 nm. As the blue phosphor, for example, there are mentioned $BaMgAl_{10}O_{17}:Eu^{2+}$, $CaMgSi_2O_6:Eu^{2+}$, $Ba_3MgSi_2O_8:Eu^{2+}$, $Srio(PO_4)_6Cl_2:Eu^{2+}$ and the like. As the green phosphor, for example, there are mentioned $(Ba,Sr)_2SiO_4:Eu^{2+}$, $Ca_8Mg(SiO_4)_4Cl_2:Eu^{2+}$, $Ca_8Mg(SiO_4)_4Cl_2:Eu^{2+},Mn^{2+}$. As the yellow phosphor, for example, there are mentioned $(Sr,Ba)_2SiO_4:Eu^{2+}$, $(Y,Gd)_3Al_5O_{12}:Ce^{3+}$, and $\alpha$-Ca-SiAlON:Eu$^{2+}$.

The red phosphor is excited by emitted light of the light sources 31 or at least one of the green phosphor or the yellow phosphor, and emits red light. The red phosphor has a light emission peak in a wavelength range of 600 nm to 650 nm. As the red phosphor, for example, there are mentioned $Sr_2Si_5N_8:Eu^{2+}$, $CaAlSiN_3:Eu^{2+,}$ $SrAlSi_4N_7:Eu^{2+}$, $CaS:Eu^{2+}$, $La_2O_2S:Eu^{3+}$, and $Y_3Mg_2(AlO_4)(SiO_4)_2:Ce^{3+}$

As illustrated in Fig. 8, the optical filter 300 is disposed on a light emitting surface of the LED module 30. Then, a part of the primary light L1 emitted from the light sources 31 passes through the wavelength conversion member 33 and the optical filter 300. Meanwhile, a part of the primary light L1 is reflected by the optical filter 300 as mentioned above. The phosphor 34 of the wavelength conversion member 33 is able to be excited by the primary light L1, but may be excited by reflected light R of the primary light L1, which is reflected by the optical filter 300. That is, the phosphor 34 may be excited by either the primary light L1 or the reflected light R, and may emit secondary light L2. Then, transmitted light T that has passed through the optical filter 300 is emitted from the LED module 30.

When the phosphor 34 of the wavelength conversion member 33 is excited by the reflected light R, the secondary light L2 that shifts to a longer wavelength side with respect to the reflected light R is emitted. In the case of having a wavelength that is not reflected by the optical filter 300, the secondary light L2 passes through the optical filter 300 and is emitted to the outside. In this case, the-reflected light R is reused and emitted to the outside, and accordingly, light emission efficiency of the LED module 30 can be improved.

[Illumination system]

Next, a description will be given of an illumination system according to the present embodiment. The illumination system according to the present embodiment includes a light emitting device.

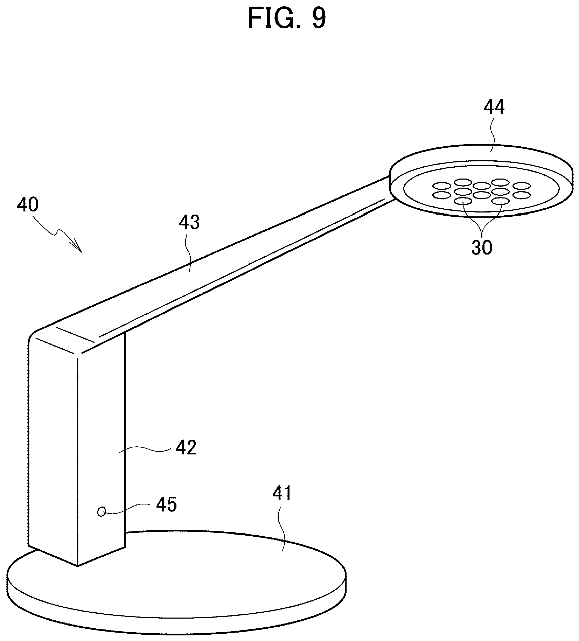

Fig. 9 illustrates a desk stand 40, which includes the LED module 30, as an example of the illumination system. As illustrated in Fig. 9, the desk stand 40 is attached with an illumination body 42 on a substantially disc-shaped base 41. The illumination body 42 includes an arm 43, and a lighting appliance 44 on a tip end of the arm 43 includes the LED module 30. A switch 45 is provided on the illumination body 42, and a lighting state of the LED module 30 is changed by switching ON/OFF of the switch 45.

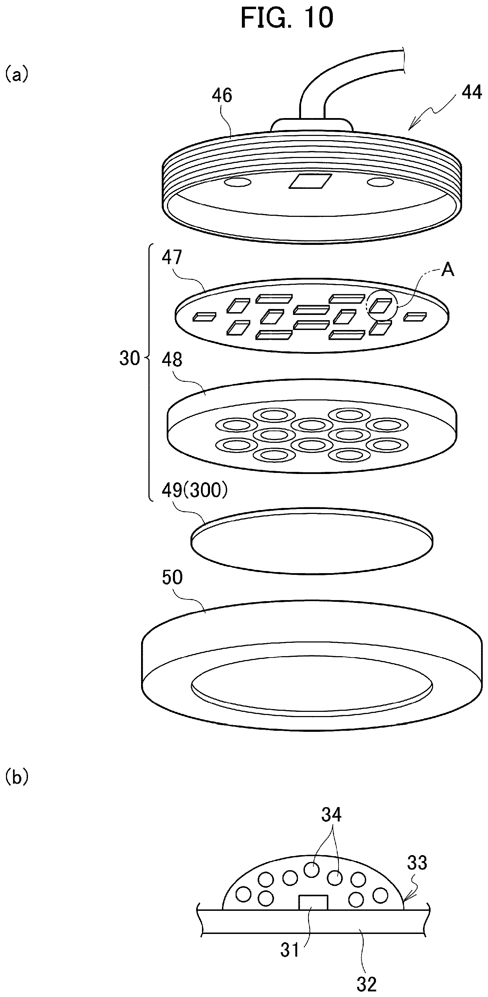

As illustrated in Fig. 10(a), the lighting appliance 44 includes a substantially cylindrical base portion 46, the LED module 30 and a cover 50. The LED module 30 includes a light source unit 47, an orientation control unit 48, and a filter 49 composed of the optical filter 300. As illustrated in Fig. 10(b), the light source unit 47 includes: a circuit board 32; a light source 31 mounted on the circuit board 32; and the wavelength conversion member 33 that is disposed on the circuit board 32 and covers the light source 31. The wavelength conversion member 33 contains the phosphor 34. The orientation control unit 48 is used for controlling light of the light source unit 47 to a desired light distribution, and includes lenses in the present embodiment. However, the orientation control unit 48 may include a reflective plate and a light guide plate depending on the configuration of the illumination system as well as the lenses.

As described above, the illumination system of the present embodiment uses at least one selected from the group consisting of the colloidal structure 10, the structural object 100, the multi-colloidal structure 20 and the multi-structural object 200, each of which is excellent in durability and easy to be subjected to the wavelength control, and accordingly, can easily obtain desired spectral characteristics. That is, the illumination system of the present embodiment becomes capable of enhancing, for example, a whiteness degree of a sheet surface irradiated with the emitted light, and improving visibility thereof. Moreover, it also becomes possible to make skin colors look good, and further, to vividly render colors of foodstuff and plant.

EXAMPLES

A detailed description will be given below of the present embodiment by examples and comparative examples; however, the present embodiment is not limited to these.

The following raw materials were used in producing test samples of Examples 1-1 to 1-3, Comparative examples 1-1 to 1-3 and Example 2.

(Colloidal particles)

· Silica particles 1: average particle size (D50): 150 nm; coefficient of variation of particle size: 5%
· Silica particles 2: average particle size (D50): 180 nm; coefficient of variation of particle size: 5%
· Silica particles 3: average particle size (D50): 200 nm; coefficient of variation of particle size: 5%

Note that the silica particles 1 to 3 were synthesized by the Stober method.

(Monomer)

· Triethylene glycol dimethacrylate monomer: NK ester 3G produced by Shin-Nakamura Chemical Co, Ltd.

(Photopolymerization initiator)

2-hydroxy-2-methyl-1-phenyl-propane-1-on: IRGACURE (registered trademark) 1173 produced by BASF SE

[Example 1-1]

First, the silica particles 1 were added into the monomer so that a content thereof was 30% by volume. Next, an ultrasonic wave of 20 kHz was applied for 10 minutes under a condition of room temperature (25 °C), whereby the silica particles 1 were dispersed into the monomer. In this way, a colloidal dispersion liquid 1 in which the colloidal particles (silica particles 1) were evenly dispersed in the monomer was obtained.

Likewise, the silica particles 2 were added into the monomer so that a content thereof was 30% by volume. Next, an ultrasonic wave of 20 kHz was applied for 10 minutes under a condition of room temperature (25 °C), whereby the silica particles 2 were dispersed into the monomer. In this way, a colloidal dispersion liquid 2 in which the colloidal particles (silica particles 2) were evenly dispersed in the monomer was obtained.

Next, the colloidal dispersion liquid 1 and the colloidal dispersion liquid 2 were mixed with each other in a mass ratio of 3 : 1, and further, a photopolymerization initiator was added thereto by 1.0% by mass. Then, this dispersion liquid was applied to a glass substrate with a square of 200 mm and a thickness of 1.0 mm by using a bar coater under the condition of room temperature (25 °C). In this case, a bar coater with #18 count was used. Then, an obtained coating film was irradiated with ultraviolet light to polymerize the monomer, whereby a test sample in which a colloidal structure with a layer thickness of approximately 40 μm was formed on the glass substrate was obtained.

[Example 1-2]

A test sample of this example was obtained in the same manner as in Example 1-1 except that a mixing ratio of the colloidal dispersion liquid 1 and the colloidal dispersion liquid 2 in the dispersion liquid was set to 2 : 1.

[Example 1-3]

First, the silica particles 3 were added into the monomer so that a content thereof was 30% by volume. Next, an ultrasonic wave of 20 kHz was applied for 10 minutes under a condition of room temperature (25 °C), whereby the silica particles 3 were dispersed into the monomer. In this way, a colloidal dispersion liquid 3 in which the colloidal particles (silica particles 3) were evenly dispersed in the monomer was obtained.
Next, the colloidal dispersion liquid 2 of Example 1-1 and the colloidal dispersion liquid 3 were mixed with each other in a mass ratio of 1 : 4, and further, a photopolymerization initiator was added thereto by 1.0% by mass. Then, this dispersion liquid was applied to a glass substrate with a square of 200 mm and a thickness of 1.0 mm by using a bar coater under the condition of room temperature (25 °C). In this case, a bar coater with #18 count was used. Then, an obtained coating film was irradiated with ultraviolet light to polymerize the monomer, whereby a test sample was obtained, in which a colloidal structure with a layer thickness of approximately 40 μm was formed on the glass substrate.

[Comparative example 1-1]

First, the silica particles 1 were added into the monomer so that a content thereof was 28% by volume. Next, an ultrasonic wave of 20 kHz was applied for 10 minutes under a condition of room temperature (25 °C), whereby the silica particles 1 were dispersed into the monomer. In this way, a colloidal dispersion liquid in which the colloidal particles (silica particles 1) were evenly dispersed in the monomer and a content was 28% by volume was obtained.
Next, a photopolymerization initiator was added by 1.0% by mass to the colloidal dispersion liquid. Then, this dispersion liquid was applied to a glass substrate with a square of 200 mm and a thickness of 1.0 mm by using a bar coater under the condition of room temperature (25 °C). In this case, a bar coater with #18 count was used. Then, an obtained coating film was irradiated with ultraviolet light to polymerize the monomer, whereby a test sample in which a colloidal crystal body with a layer thickness of approximately 40 μm and a content of the colloidal particles was 28% by volume was formed on the glass substrate was obtained.
Similarly to the way mentioned above, test samples in which colloidal crystal bodies with layer thicknesses of approximately 40 μm and contents of the colloidal particles of individually 30% by volume, 32% by volume, 34% by volume, and 36% by volume were formed were also prepared.

[Comparative example 1-2]

First, the silica particles 2 were added into the monomer so that a content thereof was 26% by volume. Next, an ultrasonic wave of 20 kHz was applied for 10 minutes under a condition of room temperature (25 °C), whereby the silica particles 2 were dispersed into the monomer. In this way, a colloidal dispersion liquid in which the colloidal particles (silica particles 2) were evenly dispersed in the monomer and a content was 26% by volume was obtained.
Next, a photopolymerization initiator was added by 1.0% by mass to the colloidal dispersion liquid. Then, this dispersion liquid was applied to a glass substrate with a square of 200 mm and a thickness of 1.0 mm by using a bar coater under the condition of room temperature (25 °C). In this case, a bar coater with #18 count was used. Then, an obtained coating film was irradiated with ultraviolet light to polymerize the monomer, whereby a test sample in which a colloidal crystal body with a layer thickness of approximately 40 μm and a content of the colloidal particles was 26% by volume was formed on the glass substrate was obtained.
Similarly to the way mentioned above, test samples in which colloidal crystal bodies with layer thicknesses of approximately 40 μm and contents of the colloidal particles of individually 28% by volume, 30% by volume, 32% by volume, and 36% by volume were formed were also prepared.

[Comparative example 1-3]

First, the silica particles 3 were added into the monomer so that a content thereof was 26% by volume. Next, an ultrasonic wave of 20 kHz was applied for 10 minutes under a condition of room temperature (25 °C), whereby the silica particles 3 were dispersed into the monomer. In this way, a colloidal dispersion liquid in which the colloidal particles (silica particles 3) were evenly dispersed in the monomer and a content was 26% by volume was obtained.

Next, a photopolymerization initiator was added by 1.0% by mass to the colloidal dispersion liquid. Then, this dispersion liquid was applied to a glass substrate with a square of 200 mm and a thickness of 1.0 mm by using a bar coater under the condition of room temperature (25 °C). In this case, a bar coater with #18 count was used. Then, an obtained coating film was irradiated with ultraviolet light to polymerize the monomer, whereby a test sample in which a colloidal crystal body with a layer thickness of approximately 40 $\mu$m and a content of the colloidal particles was 26% by volume was formed on the glass substrate was obtained.

Similarly to the way mentioned above, test samples in which colloidal crystal bodies with layer thicknesses of approximately 40 $\mu$m and contents of the colloidal particles of individually 28% by volume and 30% by volume were formed were also prepared.

[Evaluation]

(Measurement of reflection spectrum)

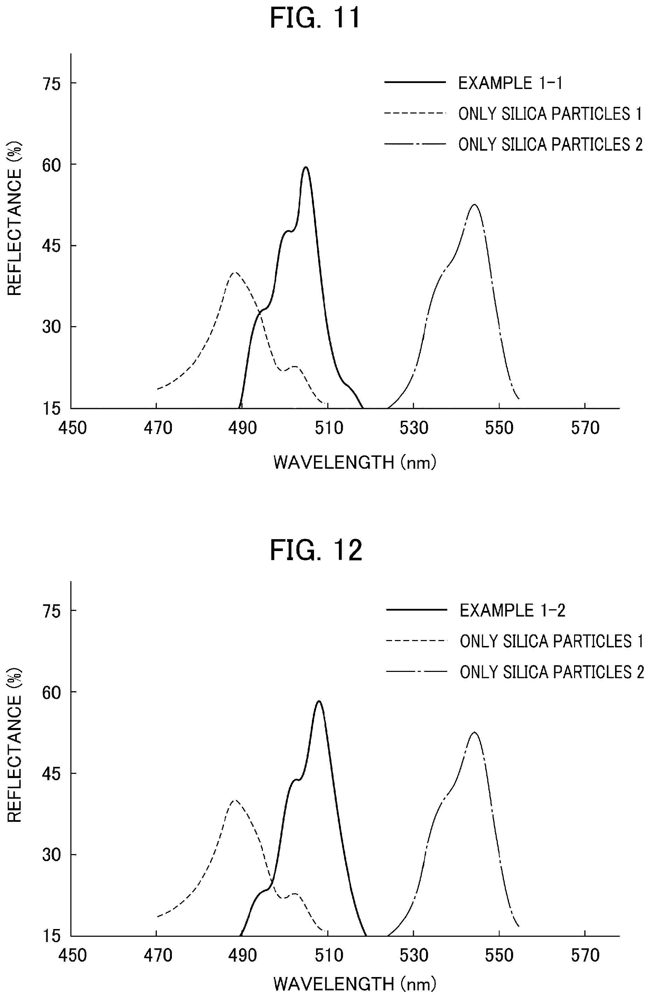

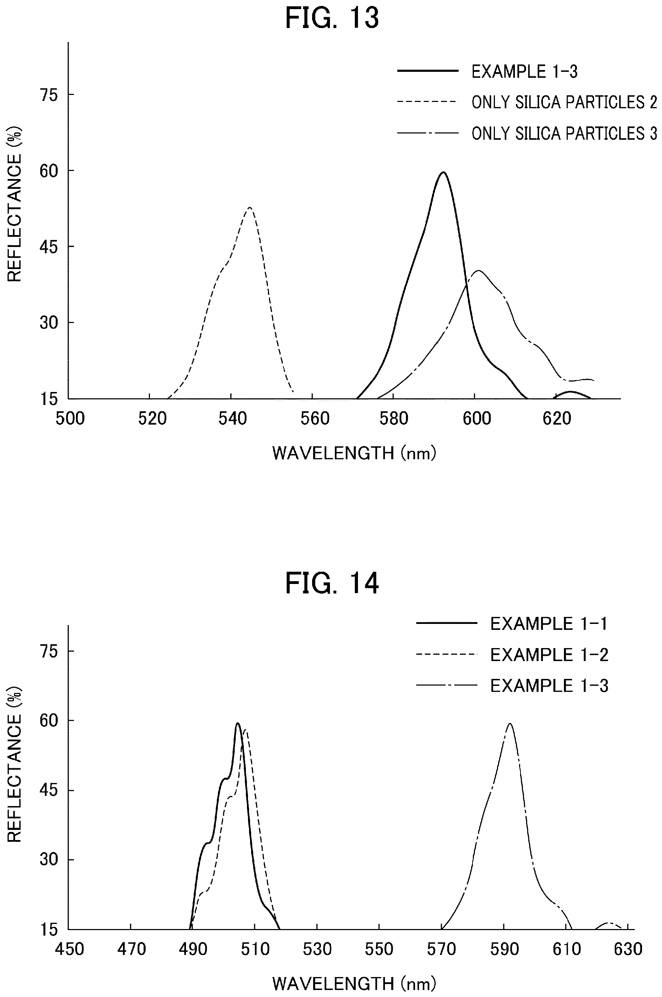

Reflection spectra of the test samples of the respective examples, which were prepared as described above, were measured by using a UV-visible spectrophotometer (UV-2600 made by Shimadzu Corporation). The reflection spectra of the test samples of Examples 1-1 and 1-2 were measured in a wavelength range of 450 nm to 580 nm, and the reflection spectrum of the test sample of Example 1-3 was measured in a wavelength range of 500 nm to 630 nm. Fig. 11 illustrates the reflection spectrum of the test sample of Example 1-1, Fig. 12 illustrates the reflection spectrum of the test sample of Example 1-2, and Fig. 13 illustrates the reflection spectrum of the test sample of Example 1-3.

Note that Fig. 11 and Fig. 12 also illustrate reflection spectra of samples in which a photopolymerization initiator was added by 1.0% by mass individually to the colloidal dispersion liquid 1 and the colloidal dispersion liquid 2, and thereafter, colloidal crystal bodies were formed similarly to Example 1-1. Moreover, Fig. 13 also illustrates reflection spectra of samples in which a photopolymerization initiator was added by 1.0% by mass individually to the colloidal dispersion liquid 2 and the colloidal dispersion liquid 3, and thereafter, colloidal crystal bodies were formed similarly to Example 1-3.

As in Fig. 11 and Fig. 12, the reflection peak wavelengths of the test samples of Examples 1-1 and 1-2 are present between a reflection peak wavelength of the colloidal crystal containing only the silica particles 1 as the colloidal particles and a reflection peak wavelength of the colloidal crystal containing only the silica particles 2 as the colloidal particles. Therefore, it is seen that the reflection peak wavelengths can be controlled by mixing the silica particles 1 and the silica particles 2 with each other to form the same into a colloidal crystal.

Moreover, as illustrated in Fig. 13, the reflection peak wavelength of the test sample of Example 1-3 are present between a reflection peak wavelength of the colloidal crystal containing only the silica particles 2 as the colloidal particles and a reflection peak wavelength of a colloidal crystal containing only the silica particles 3 as the colloidal particles. Therefore, it is seen that the reflection peak wavelength can be controlled by mixing the silica particles 2 and the silica particles 3 with each other to form the same into a colloidal crystal.

Moreover, as in Fig. 11 and Fig. 12, it is seen that reflectances of reflection peaks of the test samples of Examples 1-1 and 1-2 exceed 55%, and that the reflectances are higher than those of a reflection peak of the colloidal crystal containing only the silica particles 1 and a reflection peak of the colloidal crystal containing only the silica particles 2. Likewise, as illustrated in Fig. 13, it is seen that a reflectance of a reflection peak of the test sample of Example 1-3 exceeds 55%, and that the reflectance is higher than those of the reflection peak of the colloidal crystal containing only the silica particles 2 and a reflection peak of the colloidal crystal containing only the silica particles 3. Therefore, it is seen that the reduction of the light reflectivity can be suppressed by forming the colloidal structure by using the plurality of types of the colloidal particles.

Fig. 14 illustrates the reflection spectra of the test samples of Examples 1-1 to 1-3 in combination with one another. Example 1-1 is an example in which the colloidal dispersion liquid 1 containing the silica particles 1 and the colloidal dispersion liquid 2 containing the silica particles 2 are mixed with each other in a mass ratio of 3 : 1, and Example 1-2 is an example in which the colloidal dispersion liquid 1 and the colloidal dispersion liquid 2 are mixed with each other in a mass ratio of 2 : 1. As illustrated in Fig. 14, it is seen that the peak wavelength can be controlled at fine intervals by changing a blending ratio of two types of the colloidal particles.

Moreover, Examples 1-1 and 1-2 are colloidal structures in each of which the silica particles 1 with an average particle size of 150 nm and the silica particles 2 with an average particle size of 180 nm are mixed with each other, and Example 1-3 is a colloidal structure in which the silica particles 2 with an average particle size of 180 nm and the silica particles 3 with an average particle size of 200 nm are mixed with each other. As illustrated in Fig. 14, it is seen that the peak wavelength can be controlled at large intervals by changing a combination of two types of colloidal particles.

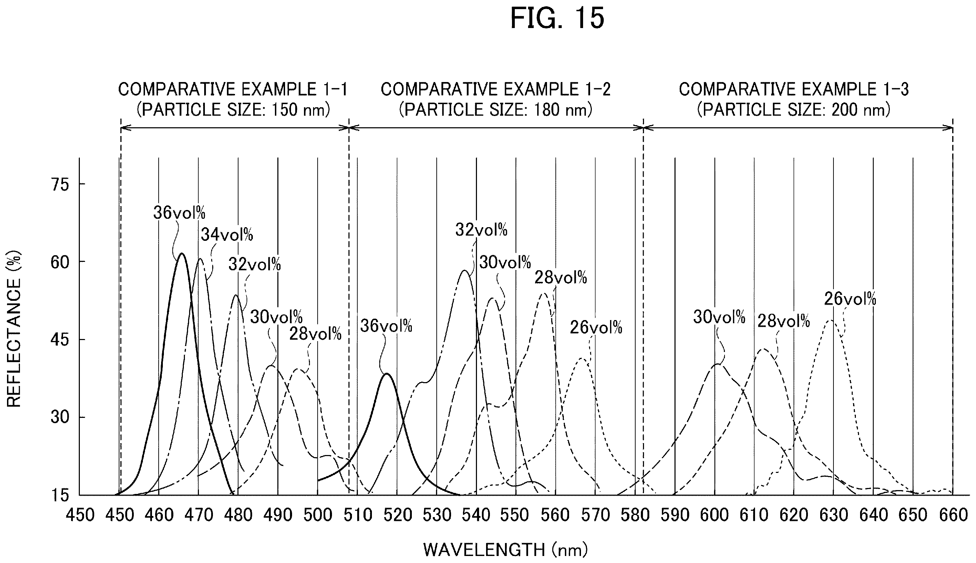

Fig. 15 illustrates results of measuring the reflection spectra of the test samples in Comparative examples 1-1 to 1-3 by using the UV-visible spectrophotometer (UV-2600 made by Shimadzu Corporation). As illustrated in Fig. 15, it is seen that, in any of Comparative examples 1-1 to 1-3, the reflection peak shifts to a high wavelength side as the concentration of the silica particles as the colloidal particles is reduced. That is, it is seen that the reflection peak of the colloidal crystal can be controlled by changing the concentration of the colloidal particles.

However, as illustrated in Fig. 15, it is seen that, in Comparative example 1-1, the reflectance decreases as the concentration of the silica particles 1 is reduced. It is seen that, in Comparative example 1-2, the reflectances of the test samples in which the concentrations of the silica particles are 26% by volume and 36% by volume decrease to a great extent in comparison with the test samples in which the concentrations of the silica particles 2 are 28 to 32% by volume. It is seen that, in Comparative example 1-3, the reflectance decreases as the concentration of the silica particles 3 is increased. It is seen that, as described above, the light reflectivity changes to a great extent though the reflection peak of the colloidal crystal can be controlled by adjusting the concentration of the colloidal particles.

(Observation by scanning electron microscope)

Surfaces of the test samples of Example 1-1 and Example 1-3 were observed by a scanning electron microscope. Moreover, a cross section of the test sample of Example 1-1 was observed by the scanning electron microscope.

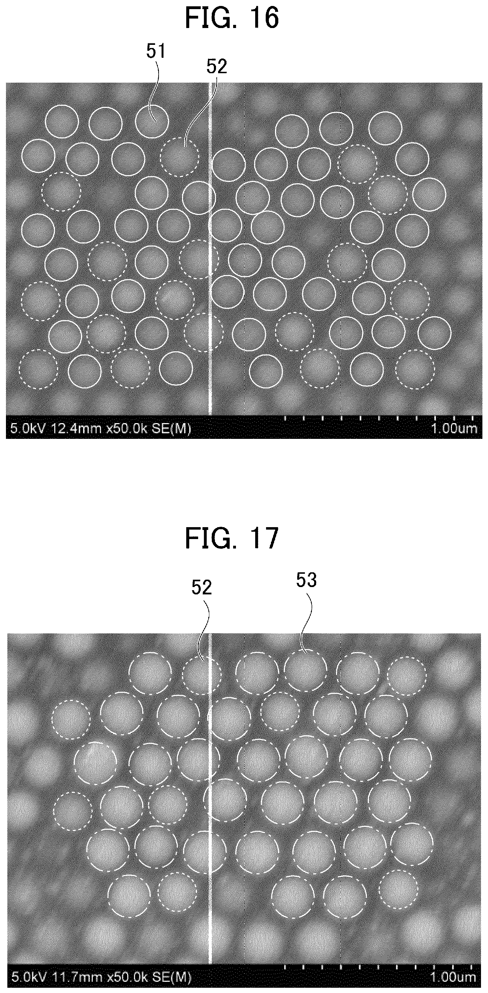

Fig. 16 shows a result of observing the surface of the test sample of Example 1-1 by the scanning electron microscope. It is seen that, as shown in Fig. 16, both of the silica particles 1 (51) with an average particle size of 150 nm and the silica particles 2 (52) with an average particle size of 180 nm are arrayed regularly. Moreover, it is seen that a ratio of the number of the silica particles 1 and the number of the silica particles 2 is approximately 3 : 1. Then, it is seen that, in the test sample of Example 1-1, the silica particles 1 and the silica particles 2 do not turn to a eutectic state by individually coagulating while being separated from each other, but the silica particles 1 and the silica particles 2 are mixed with each other to be in a state like a solid solution.

Fig. 17 shows a result of observing a surface of the test sample of Example 1-3 by the scanning electron microscope. It is seen that, as shown in Fig. 17, both of the silica particles 2 (52) with an average particle size of 180 nm and the silica particles 3 (53) with an average particle size of 200 nm are arrayed regularly. Moreover, it is seen that a ratio of the number of the silica particles 2 and the number of the silica particles 3 is approximately 1 : 4. Then, it is seen that, in the test sample of Example 1-3, the silica particles 2 and the silica particles 3 do not turn to a eutectic state by individually coagulating while being separated from each other, but the silica particles 2 and the silica particles 3 are mixed with each other to be in a state like a solid solution.

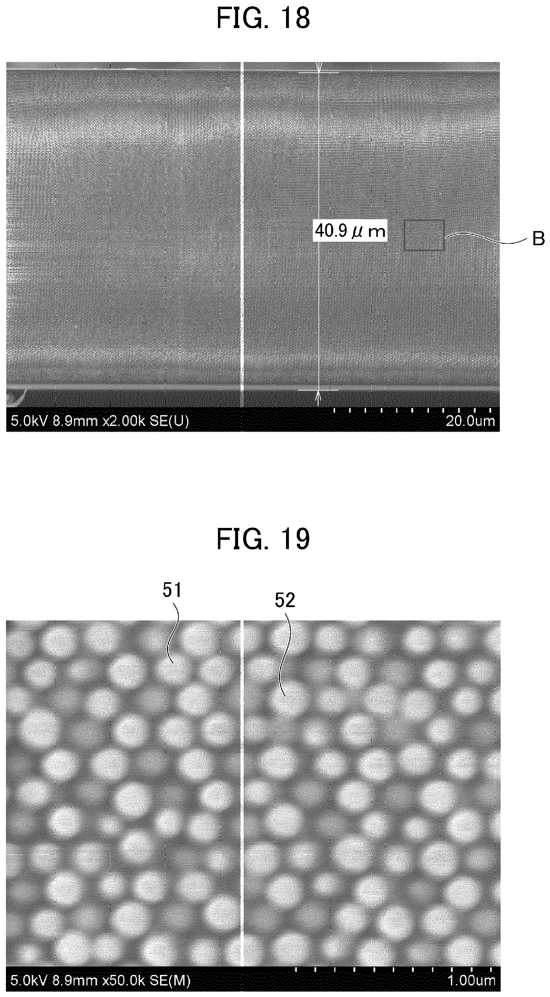

Fig. 18 shows a result of observing the cross section of the test sample of Example 1-1 by a scanning electron microscope, and Fig. 19 illustrates an enlarged region of reference symbol B in Fig. 18. It is seen that, as shown in Fig. 19, both of the silica particles 1 (51) and the silica particles 2 (52) are arrayed regularly also on the cross section of the test sample. Moreover, it is also seen that the silica particles 1 and the silica particles 2 do not turn to a eutectic state by individually coagulating while being separated from each other, but the silica particles 1 and the silica particles 2 are mixed with each other to be in a state like a solid solution.

It is seen that, as described above, in the test sample of Example 1-1, the silica particles 1 and the silica particles 2 are mixed with each other to be formed into a colloidal crystal, and further, form a three-dimensional regular array in the polymer as a matrix.

[Example 2]

First, the colloidal dispersion liquid containing the silica particles 1 with an average particle size of 150 nm and the colloidal dispersion liquid 2 containing the silica particles 2 with an average particle size of 180 nm, both of which were prepared in Example 1-1, were mixed with each other in a mass ratio of 3 : 1. Then, the photopolymerization initiator was added by 1.0% by mass to such a mixture, whereby a dispersion liquid for a colloidal structure was prepared.

Next, the photopolymerization initiator was added by 1.0% by mass to the colloidal dispersion liquid 2 containing the silica particles 2 with an average particle size of 180 nm, whereby a dispersion liquid for a colloidal crystal body was prepared.

Then, the dispersion liquid for a colloidal structure was applied to a glass substrate with a square of 200 mm and a thickness of 1.0 mm by using a bar coater under the condition of room temperature (25°C). In this case, a bar coater with #18 count was used. Then, an obtained coating film was irradiated with ultraviolet light to polymerize the monomer, whereby a colloidal structure was formed on the glass substrate.

Moreover, the dispersion liquid for a colloidal crystal body was applied to a surface of the colloidal structure by using a bar coater under the condition of room temperature (25 °C). In this case, a bar coater with #18 count was used. Then, an obtained coating film was irradiated with ultraviolet light to polymerize the monomer, whereby a colloidal crystal body was formed on the colloidal structure. As described above, a test sample in which a multi-colloidal structure was formed on the glass substrate was obtained.

[Evaluation]

A reflection spectrum of the test sample of Example 2, which was prepared as described above, was measured by using a UV-visible spectrophotometer (UV-2600 made by Shimadzu Corporation). The reflection spectrum of the test sample of Example 2 was measured in a wavelength range of 300 nm to 800 nm.

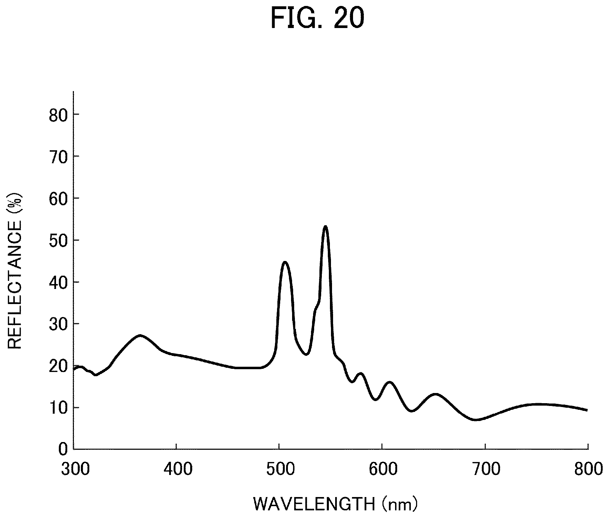

As illustrated in Fig. 20, in the reflection spectrum of Example 2, there were observed: a peak in which a maximum value of reflectance was approximately 45% in the vicinity of 500 nm to 520 nm; and a peak in which a maximum value of reflectance was approximately 55% in the vicinity of 540 nm to 560 nm. From this fact, it is seen that a multi-colloidal structure capable of reflecting light with two wavelengths can be obtained by laminating a colloidal structure and a colloidal crystal body, which have regular arrays different from each other, on each other.

Although the present embodiment has been described above, the present embodiment is not limited to these, and various modifications are possible within the scope of the spirit of the present embodiment.

INDUSTRIAL APPLICABILITY

In accordance with the present disclosure, there can be provided a colloidal structure, a multi-colloidal structure, and a method for producing a colloidal structure, in which the reflection peak wavelength in the reflection spectrum is adjustable by a simple method while suppressing the decrease of the light reflectivity.

REFERENCE SIGNS LIST

| | |
|---|---|
| 1 | First colloidal particles |
| 2 | Second colloidal particles |
| 3 | Matrix |
| 10, 10a, 10b | Colloidal structure |
| 10A | Colloidal crystal body |
| 20, 20A, 20B, 20C, 20D, 20E, 20F, 20G | Multi-colloidal structure |

**Claims**

**1.** A colloidal structure (10, 10a, 10b) comprising:

a plurality of types of colloidal particles; and
a matrix (3) that fixes the colloidal particles,
wherein the plurality of types of the colloidal particles include at least first colloidal particles (1) and second colloidal particles (2), which are different in average particle size from each other, and
wherein a coefficient of variation of particle size of each of the first colloidal particles (1) and the second colloidal particles (2) is less than 20%,
**characterized in that**
the plurality of types of the colloidal particles form a three-dimensional and periodical regular array in the matrix (3), and the regular array adopted by the first colloidal particles (1) and the second colloidal particles (2) is a close-packed structure, a face-centered cubic structure or a body-centered cubic structure, and
wherein the colloidal structure (10, 10a, 10b) forms a colloidal solid solution in which the plurality of types of the colloidal particles are formed into a colloidal crystal in a mixed state to be provided with a crystal structure similar to a solid solution.

**2.** The colloidal structure (10, 10a, 10b) according to claim 1, wherein, when a reflection peak wavelength of a colloidal crystal containing only the first colloidal particles (1) as colloidal particles is defined as $\lambda 1$, and a reflection peak wavelength of a colloidal crystal containing only the second colloidal particles (2) as colloidal particles is defined as $\lambda 2$, a reflection peak wavelength $\lambda$ of a reflection spectrum is present between the $\lambda 1$ and the $\lambda 2$.

**3.** The colloidal structure (10, 10a, 10b) according to claim 1 or 2, wherein, when the average particle size of the first colloidal particles (1) is d1, and the average particle size of the second colloidal particles (2) is d2, a ratio d1/d2 of the average particle sizes is 1.05 or more and less than 1.60.

**4.** The colloidal structure (10, 10a, 10b) according to any one of claims 1 to 3, wherein a center-to-center distance between the adjacent colloidal particles is 100 nm or more and 300 nm or less.

5. A multi-colloidal structure (20, 20A, 20B, 20C, 20D, 20E, 20F, 20G) comprising: a plurality of colloidal structures (10, 10a, 10b), each of which being the colloidal structure (10, 10a, 10b) according to any one of claims 1 to 4.

6. The multi-colloidal structure (20, 20A, 20B, 20C, 20D, 20E, 20F, 20G) according to claim 5, wherein, in two colloidal structures (10, 10a, 10b) selected from the plurality of colloidal structures (10, 10a, 10b), a difference between a peak wavelength of a reflection spectrum of one of the colloidal structures (10, 10a, 10b) and a peak wavelength of a reflection spectrum of the other colloidal structure (10, 10a, 10b) exceeds 10 nm.

7. The multi-colloidal structure (20, 20A, 20B, 20C, 20D, 20E, 20F, 20G) according to claim 5, wherein, in two colloidal structures (10, 10a, 10b) selected from the plurality of colloidal structures (10, 10a, 10b), a difference between a peak wavelength of a reflection spectrum of one of the colloidal structures (10, 10a, 10b) and a peak wavelength of a reflection spectrum of the other colloidal structure (10, 10a, 10b) is 10 nm or less.

8. A multi-colloidal structure (20, 20A, 20B, 20C, 20D, 20E, 20F, 20G) comprising: the colloidal structure (10, 10a, 10b) according to any one of claims 1 to 4; and a colloidal crystal body including: only one type of colloidal particles; and a matrix (3) that fixes the only one type of colloidal particles, in which the only one type of colloidal particles form a regular array in the matrix (3).

9. The multi-colloidal structure (20, 20A, 20B, 20C, 20D, 20E, 20F, 20G) according to claim 8, wherein a difference between a peak wavelength of a reflection spectrum of the colloidal structure (10, 10a, 10b) and a peak wavelength of a reflection spectrum of the colloidal crystal body exceeds 10 nm.

10. The multi-colloidal structure (20, 20A, 20B, 20C, 20D, 20E, 20F, 20G) according to claim 8, wherein a difference between a peak wavelength of a reflection spectrum of the colloidal structure (10, 10a, 10b) and a peak wavelength of a reflection spectrum of the colloidal crystal body is 10 nm or less.

11. A method for producing a colloidal structure (10, 10a, 10b), the method comprising:

a dispersion liquid preparation step of preparing a colloidal dispersion liquid by dispersing a plurality of types of colloidal particles including at least first colloidal particles (1) and second colloidal particles (2), which are different in average particle size from each other, together with at least one type of a monomer;
a coating film generation step of applying the colloidal dispersion liquid onto a substrate and generating a coating film; and
a polymerization step of fixing the plurality of types of the colloidal particles by a polymer by polymerizing the monomer in the coating film,
wherein a coefficient of variation of particle size of each of the first colloidal particles (1) and the second colloidal particles (2) is less than 20%,
**characterized in that**
in the polymerization step, the plurality of types of the colloidal particles form a three-dimensional and periodical regular array in the polymer, wherein the regular array adopted by the first colloidal particles (1) and the second colloidal particles (2) is a close-packed structure, a face-centered cubic structure or a body-centered cubic structure, and the colloidal structure (10, 10a, 10b) forms a colloidal solid solution in which the plurality of types of the colloidal particles are formed into a colloidal crystal in a mixed state to be provided with a crystal structure similar to a solid solution.

**Patentansprüche**

1. Kolloidale Struktur (10, 10a, 10b), umfassend:

eine Vielzahl von Arten von kolloidalen Partikeln; und
eine Matrix (3), welche die kolloidalen Partikel fixiert,
wobei die Vielzahl von Arten der kolloidalen Partikel mindestens erste kolloidale Partikel (1) und zweite kolloidale Partikel (2) enthält, die sich in ihrer durchschnittlichen Partikelgröße voneinander unterscheiden, und
wobei ein Variationskoeffizient der Partikelgröße jedes der ersten kolloidalen Partikel (1) und der zweiten kolloidalen Partikel (2) weniger als 20 % beträgt,

**dadurch gekennzeichnet, dass** die Vielzahl von Arten der kolloidalen Partikel eine dreidimensionale und periodisch regelmäßige Anordnung in der Matrix (3) bilden und die regelmäßige Anordnung, die von den ersten kolloidalen Partikeln (1) und den zweiten kolloidalen Partikeln (2) angenommen wird, eine dicht gepackte Struktur, eine flächenzentrierte kubische Struktur oder eine raumzentrierte kubische Struktur ist, und wobei die kolloidale Struktur (10, 10a, 10b) eine kolloidale feste Lösung bildet, in der die Vielzahl von Arten der kolloidalen Partikel zu einem kolloidalen Kristall in einem gemischten Zustand geformt sind, um mit einer Kristallstruktur versehen zu sein, die einer festen Lösung ähnlich ist.

2. Kolloidale Struktur (10, 10a, 10b) nach Anspruch 1, wobei, wenn eine Reflexionsspitzenwellenlänge eines kolloidalen Kristalls, der nur die ersten kolloidalen Partikel (1) als kolloidale Partikel enthält, als λ1 definiert ist und eine Reflexionsspitzenwellenlänge eines kolloidalen Kristalls, der nur die zweiten kolloidalen Partikel (2) als kolloidale Partikel enthält, als λ2 definiert ist, eine Reflexionsspitzenwellenlänge λ eines Reflexionsspektrums zwischen λ1 und λ2 vorliegt.

3. Kolloidale Struktur (10, 10a, 10b) nach Anspruch 1 oder 2, wobei, wenn die durchschnittliche Partikelgröße der ersten kolloidalen Partikel (1) d1 ist und die durchschnittliche Partikelgröße der zweiten kolloidalen Partikel (2) d2 ist, ein Verhältnis d1/d2 der durchschnittlichen Partikelgrößen 1,05 oder mehr und weniger als 1,60 beträgt.

4. Kolloidale Struktur (10, 10a, 10b) nach einem der Ansprüche 1 bis 3, wobei der Abstand zwischen den Mittelpunkten benachbarter kolloidaler Partikel 100 nm oder mehr und 300 nm oder weniger beträgt.

5. Multikolloidale Struktur (20, 20A, 20B, 20C, 20D, 20E, 20F, 20G), umfassend: eine Vielzahl von kolloidalen Strukturen (10, 10a, 10b), von denen jede die kolloidale Struktur (10, 10a, 10b) nach einem der Ansprüche 1 bis 4 ist.

6. Multikolloidale Struktur (20, 20A, 20B, 20C, 20D, 20E, 20F, 20G) nach Anspruch 5, wobei in zwei kolloidalen Strukturen (10, 10a, 10b), ausgewählt aus der Vielzahl von kolloidalen Strukturen (10, 10a, 10b), eine Differenz zwischen einer Spitzenwellenlänge eines Reflexionsspektrums einer der kolloidalen Strukturen (10, 10a, 10b) und einer Spitzenwellenlänge eines Reflexionsspektrums der anderen kolloidalen Struktur (10, 10a, 10b) 10 nm überschreitet.

7. Multikolloidale Struktur (20, 20A, 20B, 20C, 20D, 20E, 20F, 20G) nach Anspruch 5, wobei in zwei kolloidalen Strukturen (10, 10a, 10b), ausgewählt aus der Vielzahl von kolloidalen Strukturen (10, 10a, 10b), eine Differenz zwischen einer Spitzenwellenlänge eines Reflexionsspektrums einer der kolloidalen Strukturen (10, 10a, 10b) und einer Spitzenwellenlänge eines Reflexionsspektrums der anderen kolloidalen Struktur (10, 10a, 10b) 10 nm oder weniger beträgt.

8. Multikolloidale Struktur (20, 20A, 20B, 20C, 20D, 20E, 20F, 20G), umfassend: die kolloidale Struktur (10, 10a, 10b) nach einem der Ansprüche 1 bis 4; und einen kolloidalen Kristallkörper, enthaltend: nur einen Typ von kolloidalen Partikeln; und eine Matrix (3), welche den einzigen Typ von kolloidalen Partikeln fixiert, wobei der einzige Typ von kolloidalen Partikeln eine regelmäßige Anordnung in der Matrix (3) bildet.

9. Multikolloidale Struktur (20, 20A, 20B, 20C, 20D, 20E, 20F, 20G) nach Anspruch 8, wobei eine Differenz zwischen einer Spitzenwellenlänge eines Reflexionsspektrums der kolloidalen Struktur (10, 10a, 10b) und einer Spitzenwellenlänge eines Reflexionsspektrums des kolloidalen Kristallkörpers 10 nm überschreitet.

10. Multikolloidale Struktur (20, 20A, 20B, 20C, 20D, 20E, 20F, 20G) nach Anspruch 8, wobei eine Differenz zwischen einer Spitzenwellenlänge eines Reflexionsspektrums der kolloidalen Struktur (10, 10a, 10b) und einer Spitzenwellenlänge eines Reflexionsspektrums des kolloidalen Kristallkörpers 10 nm oder weniger beträgt.

11. Verfahren zur Herstellung einer kolloidalen Struktur (10, 10a, 10b), wobei das Verfahren umfasst:

einen Dispersionsflüssigkeits-Herstellungsschritt zum Herstellen einer kolloidalen Dispersionsflüssigkeit durch Dispergieren einer Vielzahl von Arten von kolloidalen Partikeln, enthaltend mindestens erste kolloidale Partikel (1) und zweite kolloidale Partikel (2), die sich in ihrer durchschnittlichen Partikelgröße voneinander unterscheiden, zusammen mit mindestens einer Art von Monomer;
einen Schritt zum Erzeugen eines Beschichtungsfilms, bei dem die kolloidale Dispersionsflüssigkeit auf ein Substrat aufgebracht und ein Beschichtungsfilm erzeugt wird; und
einen Polymerisationsschritt zum Fixieren der Vielzahl von Arten von kolloidalen Partikeln durch ein Polymer, indem das Monomer in dem Beschichtungsfilm polymerisiert wird,
wobei ein Variationskoeffizient der Partikelgröße jedes der ersten kolloidalen Partikel (1) und der zweiten kolloidalen Partikel (2) weniger als 20 % beträgt,
**dadurch gekennzeichnet, dass** in dem Polymerisationsschritt die Vielzahl von Arten der kolloidalen Partikel eine dreidimensionale und periodisch regelmäßige Anordnung in dem Polymer bilden, wobei die regelmäßige Anordnung, die von den ersten kolloidalen Partikeln (1) und den zweiten kolloidalen Partikeln (2) angenommen wird, eine dicht gepackte Struktur, eine flächenzentrierte kubische Struktur oder eine raumzentrierte kubische Struktur ist, und die kolloidale Struktur (10, 10a, 10b) eine kolloidale feste Lösung bildet, in der die Vielzahl von Arten der kolloidalen Partikel zu einem kolloidalen Kristall in einem gemischten Zustand geformt werden, um mit einer Kristallstruktur versehen zu werden, die einer festen Lösung ähnlich ist.

## Revendications

1. Structure colloïdale (10, 10a, 10b) comprenant :

   une pluralité de types de particules colloïdales ; et
   une matrice (3) qui fixe les particules colloïdales,
   dans laquelle la pluralité de types des particules colloïdales incluent au moins des premières particules colloïdales (1) et des secondes particules colloïdales (2), qui sont de taille particulaire moyenne différente l'une de l'autre, et
   dans laquelle un coefficient de variation de taille particulaire de chacune des premières particules colloïdales (1) et des secondes particules colloïdales (2) est inférieur à 20 %,
   **caractérisée en ce que**
   la pluralité de types des particules colloïdales forment un réseau tridimensionnel et régulier périodique dans la matrice (3), et le réseau régulier adopté par les premières particules colloïdales (1) et les secondes particules colloïdales (2) est une structure hexagonale compacte, une structure cubique à faces centrées ou une structure cubique à corps centré, et
   dans laquelle la structure colloïdale (10, 10a, 10b) forme une solution solide colloïdale dans laquelle la pluralité de types des particules colloïdales sont formées en un cristal colloïdal dans un état mélangé devant être pourvu d'une structure cristalline similaire à une solution solide.

2. Structure colloïdale (10, 10a, 10b) selon la revendication 1, dans laquelle, lorsqu'une longueur d'onde de pic de réflexion d'un cristal colloïdal contenant uniquement les premières particules colloïdales (1) en tant que particules colloïdales est définie par $\lambda 1$ et une longueur d'onde de pic de réflexion d'un cristal colloïdal contenant uniquement les secondes particules colloïdales (2) en tant que particules colloïdales est définie par $\lambda 2$, une longueur d'onde de pic de réflexion $\lambda$ d'un spectre de réflexion est présente entre la $\lambda 1$ et la $\lambda 2$.

3. Structure colloïdale (10, 10a, 10b) selon la revendication 1 ou 2, dans laquelle, lorsque la taille particulaire moyenne des premières particules colloïdales (1) est d1 et la taille particulaire moyenne des secondes particules colloïdales (2) est d2, un rapport d1/d2 des tailles particulaires moyennes est de 1,05 ou plus et moins de 1,60.

4. Structure colloïdale (10, 10a, 10b) selon l'une quelconque des revendications 1 à 3, dans laquelle une distance d'un centre à l'autre entre les particules colloïdales adjacentes est de 100 nm ou plus et 300 nm ou moins.

5. Structure multi-colloïdale (20, 20A, 20B, 20C, 20D, 20E, 20F, 20G) comprenant :
   une pluralité de structures colloïdales (10, 10a, 10b) dont chacune est la structure colloïdale (10, 10a, 10b) selon l'une quelconque des revendications 1 à 4.

6. Structure multi-colloïdale (20, 20A, 20B, 20C, 20D, 20E, 20F, 20G) selon la revendication 5, dans laquelle, dans deux structures colloïdales (10, 10a, 10b) sélectionnées parmi la pluralité de structures colloïdales (10, 10a, 10b), une différence entre une longueur d'onde de pic d'un spectre de réflexion d'une des structures colloïdales (10, 10a, 10b) et une longueur d'onde de pic d'un spectre de réflexion de l'autre structure colloïdale (10, 10a, 10b) dépasse 10 nm.

7. Structure multi-colloïdale (20, 20A, 20B, 20C, 20D, 20E, 20F, 20G) selon la revendication 5, dans laquelle, dans deux structures colloïdales (10, 10a, 10b) sélectionnées parmi la pluralité de structures colloïdales (10, 10a, 10b), une différence entre une longueur d'onde de pic d'un spectre de réflexion d'une des structures colloïdales (10, 10a, 10b) et une longueur d'onde de pic d'un spectre de réflexion de l'autre structure colloïdale (10, 10a, 10b) est de 10 nm ou moins.

8. Structure multi-colloïdale (20, 20A, 20B, 20C, 20D, 20E, 20F, 20G) comprenant :

   la structure colloïdale (10, 10a, 10b) selon l'une quelconque des revendications 1 à 4 ; et
   un corps de cristal colloïdal incluant : un seul type de particules colloïdales ; et
   une matrice (3) qui fixe le seul type de particules colloïdales dans laquelle le seul type de particules colloïdales forment un réseau régulier dans la matrice (3).

9. Structure multi-colloïdale (20, 20A, 20B, 20C, 20D, 20E, 20F, 20G) selon la revendication 8, dans laquelle une différence entre une longueur d'onde de pic d'un spectre de réflexion de la structure colloïdale (10, 10a, 10b) et une longueur d'onde de pic d'un spectre de réflexion du corps de cristal colloïdal dépasse 10 nm.

10. Structure multi-colloïdale (20, 20A, 20B, 20C, 20D, 20E, 20F, 20G) selon la revendication 8, dans laquelle une différence entre une longueur d'onde de pic d'un spectre de réflexion de la structure colloïdale (10, 10a, 10b) et une longueur d'onde de pic d'un spectre de réflexion du corps de cristal colloïdal est de 10 nm ou moins.

11. Procédé de production d'une structure colloïdale (10, 10a, 10b), le procédé comprenant :

    une étape de préparation de liquide de dispersion consistant à préparer un liquide de dispersion colloïdal en dispersant une pluralité de types de particules colloïdales incluant au moins des premières particules colloïdales (1) et des secondes particules colloïdales (2), qui sont de taille particulaire moyenne différente l'une de l'autre, conjointement à au moins un type d'un monomère ;
    une étape de génération de film d'enrobage consistant à appliquer le liquide de dispersion colloïdal sur un substrat et générer un film d'enrobage ; et
    une étape de polymérisation consistant à fixer la pluralité de types des particules colloïdales par un polymère en polymérisant le monomère dans le film d'enrobage,
    dans lequel un coefficient de variation de taille particulaire de chacune des premières particules colloïdales (1) et des secondes particules colloïdales (2) est inférieur à 20 %,
    **caractérisé en ce que**
    dans l'étape de polymérisation, la pluralité de types des particules colloïdales forment un réseau tridimensionnel et régulier périodique dans le polymère, dans lequel le réseau régulier adopté par les premières particules colloïdales (1) et les secondes particules colloïdales (2) est une structure hexagonale compacte, une structure cubique à faces centrées ou une structure cubique à corps centré, et la structure colloïdale (10, 10a, 10b) forme une solution solide colloïdale dans laquelle la pluralité de types des particules colloïdales sont formées en un cristal colloïdal dans un état mélangé devant être pourvu d'une structure cristalline similaire à une solution solide.

# FIG. 1

# FIG. 2

FIG. 3

# FIG. 4

(a)

(b)

(c)

EP 3 812 428 B1

# FIG. 5

(a)

(b)

(c)

# FIG. 6

(a)

(b)

(c)

EP 3 812 428 B1

# FIG. 7

(a)

(b)

(c)

EP 3 812 428 B1

# FIG. 8

# FIG. 9

# FIG. 10

(a)

(b)

# FIG. 11

# FIG. 12

# FIG. 13

# FIG. 14

# FIG. 15

EP 3 812 428 B1

FIG. 16

FIG. 17

# FIG. 18

# FIG. 19

# FIG. 20

**REFERENCES CITED IN THE DESCRIPTION**

**Patent documents cited in the description**

- JP 5541620 B
- US 2017361297 A1
- JP 2009139796 A